# EUROPEAN PATENT APPLICATION

(11) **EP 4 614 420 A1**
(43) Date of publication of application: **10.09.2025**
(21) Application number: 23890738.0
(22) Date of filing: 13.11.2023
(51) Int. Cl.: G06Q 30/0241

(54) **ADVERTISEMENT PLACEMENT METHOD AND APPARATUS**

(30) Priority: 14.11.2022 CN 202211426837
(71) Applicant: Huawei Technologies Co., Ltd., Shenzhen, Guangdong 518129 (CN)
(72) Inventor: HE, Yiliang, Shenzhen, Guangdong 518129 (CN)
(74) Representative: Pfenning, Meinig & Partner mbB
(86) International application number: PCT/CN2023/131365
(87) International publication number: WO 2024/104305

(57) **Abstract**

This application provides an advertising delivery method and apparatus, applied to the field of Internet technologies, to resolve a problem of resource consumption caused by frequently sending an advertising request by a terminal to an advertising server a plurality of times within a short time period. The method includes: A terminal generates a first advertising request; and the terminal determines, based on a suppression strategy, whether the first advertising request is suppressed. The terminal obtains first advertising content locally based on the first advertising request if the first advertising request is suppressed; or if the first advertising request is suppressed, the terminal obtains first advertising information locally based on the first advertising request and obtains first advertising content based on the first advertising information; and the terminal displays the first advertising content. If the first advertising request is not suppressed, the terminal sends the first advertising request to an advertising server and obtains an advertising response from the advertising server, where the advertising response includes second advertising information. The terminal displays, based on the advertising response, second advertising content corresponding to the second advertising information. This application is applied to an advertising delivery process.

## Description

This application claims priority to Chinese Patent Application No. 202211426837.3, filed with the China National Intellectual Property Administration on November 14, 2022 and entitled "ADVERTISING DELIVERY METHOD AND APPARATUS", which is incorporated herein by reference in its entirety.

### TECHNICAL FIELD

This application relates to the field of Internet technologies, and in particular, to an advertising delivery method and apparatus.

### BACKGROUND

An Internet advertising system usually includes an advertising server (which may also be described as an advertising platform) on a cloud side and a software development kit (software development kit, SDK), corresponding to the advertising server, on a terminal side. Advertisers upload to-be-delivered advertising content (for example, advertising images, videos, copies, and audio) to advertising servers. An application (application, App) of the terminal accesses an SDK corresponding to each advertising server, and interacts with the advertising server by invoking the SDK.

In a process in which a user uses the app, the app is triggered to invoke the SDK to send a real-time advertising request to the corresponding advertising server. The advertising server determines, based on the advertising request sent by the SDK, advertising content that meets the advertising request, and sends the advertising content to the SDK. Then, the app displays the obtained advertising content on a display interface.

However, for some apps, to maximize advertising revenue, SDKs frequently send advertising requests to corresponding advertising servers a plurality of times within a short time period. As a result, a large amount of traffic may be consumed by a user, and a workload of the advertising server may be increased.

### SUMMARY

Embodiments of this application provide an advertising delivery method and apparatus. A terminal suppresses an advertising request based on a suppression strategy configured by using advertising-related information in different dimensions. If the advertising request is suppressed, the terminal obtains advertising content locally. If the advertising request is not suppressed, the terminal obtains advertising content from an advertising server. This reduces a number of times of sending an advertising request to the advertising server, reduces consumption of resources such as user traffic, reduces a workload of the advertising server, and avoids a waste of resources. In addition, for the suppressed advertising request, the corresponding advertising content is obtained locally, retaining personalization and realtimeness of advertising.

To achieve the foregoing technical objective, embodiments of this application provide the following technical solutions.

According to a first aspect, an advertising delivery method is provided. The method includes: A terminal generates a first advertising request; and determines, based on a suppression strategy, whether the first advertising request is suppressed. The terminal obtains first advertising content locally based on the first advertising request if the first advertising request is suppressed; or if the first advertising request is suppressed, obtains first advertising information locally based on the first advertising request and then obtains first advertising content based on the first advertising information. Then, the terminal displays the first advertising content. The terminal sends the first advertising request to an advertising server if the first advertising request is not suppressed, and obtains an advertising response from the advertising server, where the advertising response includes second advertising information. The terminal displays, based on the advertising response, second advertising content corresponding to the second advertising information.

In this way, the terminal determines, based on the suppression strategy, whether the advertising request is suppressed, and if the advertising request is suppressed, obtains the advertising content locally, or if the advertising request is not suppressed, obtains the advertising content from the advertising server. This can prevent the terminal from sending the advertising request to the advertising server a plurality of times within a short time period, reduce a number of times of sending an advertising request by the terminal to the advertising server, reduce resource consumption, and reduce a workload of the advertising server.

According to the first aspect, in a possible implementation, the first advertising request carries at least one piece of first parameter information; and the determining, based on a suppression strategy, whether the first advertising request is suppressed includes: determining, based on the at least one piece of first parameter information carried in the first advertising request, the suppression strategy corresponding to the first advertising request; and determining, based on the suppression strategy corresponding to the first advertising request, whether the first advertising request is suppressed.

For example, the first parameter information includes one or more of the following: an application identifier, an advertising slot, an advertising type, an advertising form, an advertising floor price, scenario information, and terminal device information.

According to the first aspect, in a possible implementation, one or more applications are installed on the terminal, and the application integrates an SDK or SDKs corresponding to one or more advertising servers. The generating a first advertising request and determining, based on a suppression strategy, whether the first advertising request is suppressed includes: The SDK of the application of the terminal generates the first advertising request; and the SDK determines, based on the suppression strategy, whether the first advertising request is suppressed.

According to the first aspect, in a possible implementation, the obtaining first advertising content locally based on the first advertising request if the first advertising request is suppressed includes: if the SDK determines that the first advertising request is suppressed, obtaining, based on the first advertising request, the first advertising content corresponding to the first advertising request from at least one piece of locally cached advertising content.

According to the first aspect, in a possible implementation, that the terminal obtains first advertising information locally based on the first advertising request and obtains first advertising content based on the first advertising information, if the first advertising request is suppressed includes: if the SDK determines that the first advertising request is suppressed, obtaining, from at least one piece of locally cached advertising information based on the first advertising request, the first advertising information corresponding to the first advertising request, and obtaining the first advertising content based on the first advertising information.

According to the first aspect, in a possible implementation, the sending the first advertising request to an advertising server and obtaining an advertising response from the advertising server, if the first advertising request is not suppressed includes: If the SDK determines that the first advertising request is not suppressed, the SDK sends the first advertising request to the advertising server, and obtains the advertising response from the advertising server.

According to the first aspect, in a possible implementation, the first advertising information includes a download address of the first advertising content, and the second advertising information includes a download address of the second advertising content.

According to the first aspect, in a possible implementation, the terminal obtains the suppression strategy from the advertising server after generating the first advertising request.

According to the first aspect, in a possible implementation, after generating the first advertising request, the terminal obtains, from the advertising server based on the at least one piece of first parameter information carried in the first advertising request, the suppression strategy corresponding to the first advertising request.

According to the first aspect, in a possible implementation, the terminal obtains the suppression strategy from the advertising server before generating the first advertising request.

**In** this way, the terminal obtains, at any time in a process of performing advertising delivery, the suppression strategy configured by the advertising server, to help the terminal suppress the advertising request based on the suppression strategy, manage advertising delivery, and improve accuracy of advertising suppression.

According to the first aspect, in a possible implementation, the suppression strategy includes a suppression condition and a suppression method. The determining, based on a suppression strategy, whether the first advertising request is suppressed includes: if the first advertising request meets the suppression condition of the suppression strategy corresponding to the first advertising request, determining that the first advertising request is suppressed, and suppressing a second advertising request according to the suppression method of the suppression strategy corresponding to the first advertising request. The second advertising request is an advertising request generated by the terminal after the first advertising request.

**In** this way, for an advertising request that meets the suppression condition of the suppression strategy, a subsequent advertising request generated by the terminal is suppressed according to the suppression method, to reduce a number of times of sending an advertising request by the terminal to the advertising server, reduce a waste of resources, and improve a processing speed of the terminal for the subsequent advertising request.

According to the first aspect, in a possible implementation, the obtaining first advertising content locally based on the first advertising request includes: obtaining the at least one piece of first parameter information from the first advertising request; and obtaining the first advertising content from the at least one piece of locally cached advertising content based on the first parameter information.

According to the first aspect, in a possible implementation, the obtaining first advertising information locally based on the first advertising request and obtaining first advertising content based on the first advertising information includes: obtaining the at least one piece of first parameter information from the first advertising request; obtaining the first advertising information from the at least one piece of locally cached advertising information based on the first parameter information; and obtaining the first advertising content based on the first advertising information.

In this way, the advertising content displayed by the terminal is determined based on the first parameter information carried in the advertising request, and conforms to advertising content requested by the terminal, to ensure personalization of advertising.

According to the first aspect, in a possible implementation, the advertising response includes at least one piece of advertising information, and the at least one piece of advertising information includes the second advertising information. The displaying, based on the advertising response, second advertising content includes: determining the second advertising information from the advertising response; obtaining the second advertising content based on the second advertising information; and displaying the second advertising content.

In this way, for the advertising request that is not suppressed, a latest advertising response is obtained from the advertising server, to ensure realtimeness and novelty of advertising.

According to the first aspect, in a possible implementation, the advertising response includes at least one piece of advertising information, and the at least one piece of advertising information includes the second advertising information and third advertising information.

According to the first aspect, in a possible implementation, the second advertising content and second parameter information associated with the second advertising content are obtained based on the second advertising information; third advertising content and third parameter information associated with the third advertising content are obtained based on the third advertising information; and the second advertising content, the second parameter information, the third advertising content, and the third parameter information are locally cached. The third advertising information includes a download address of the third advertising content, and the third advertising content is undisplayed advertising content.

According to the first aspect, in a possible implementation, third advertising content and third parameter information associated with the third advertising content are obtained based on the third advertising information; and the third advertising content and the third parameter information are locally cached.

For example, the second parameter information includes one or more of the following: an advertising slot, an advertising type, an advertising form, an advertising floor price, an advertising size, and scenario information.

In this case, after the advertising response returned by the advertising server is obtained, the advertising content in the advertising response is cached. When the advertising content is cached, the undisplayed advertising content can be cached, to subsequently display the previously undisplayed advertising content.

According to a second aspect, a terminal is provided, where the terminal includes an application, an advertising request suppression module, and an advertising request processing module. The application is configured to generate a first advertising request. The advertising request suppression module is configured to determine, based on a suppression strategy, whether the first advertising request is suppressed. The advertising request processing module is configured to obtain first advertising content locally based on the first advertising request if the first advertising request is suppressed. Alternatively, the advertising request processing module is configured to: if the first advertising request is suppressed, obtain first advertising information locally based on the first advertising request and obtain first advertising content based on the first advertising information. The application is further configured to display the first advertising content. The advertising request processing module is further configured to: if the first advertising request is not suppressed, send the first advertising request to an advertising server and obtain an advertising response from the advertising server, where the advertising response includes second advertising information. The application is further configured to display, based on the advertising response, second advertising content corresponding to the second advertising information.

For example, the first parameter information includes one or more of the following: an application identifier, an advertising slot, an advertising type, an advertising form, an advertising floor price, scenario information, and terminal device information.

According to the second aspect, in a possible implementation, the first advertising request carries at least one piece of first parameter information.

According to the second aspect, in a possible implementation, the advertising request suppression module is further configured to determine, based on the at least one piece of first parameter information carried in the first advertising request, the suppression strategy corresponding to the first advertising request; and the advertising request suppression module is further configured to determine, based on the suppression strategy corresponding to the first advertising request, whether the first advertising request is suppressed.

According to the second aspect, in a possible implementation, the first advertising information includes a download address of the first advertising content, and the second advertising information includes a download address of the second advertising content.

According to the second aspect, in a possible implementation, the advertising request suppression module is further configured to obtain the suppression strategy from the advertising server after generating the first advertising request.

According to the second aspect, in a possible implementation, the advertising request suppression module is further configured to obtain, from the advertising server based on the at least one piece of first parameter information carried in the first advertising request, the suppression strategy corresponding to the first advertising request.

According to the second aspect, in a possible implementation, the advertising request suppression module is further configured to obtain the suppression strategy from the advertising server before generating the first advertising request.

According to the second aspect, in a possible implementation, the suppression strategy includes a suppression condition and a suppression method.

According to the second aspect, in a possible implementation, the advertising request suppression module is further configured to: if the first advertising request meets the suppression condition of the suppression strategy corresponding to the first advertising request, determine that the first advertising request is suppressed, and suppress a second advertising request according to the suppression method of the suppression strategy corresponding to the first advertising request, where the second advertising request is an advertising request generated by the application after the first advertising request.

According to the second aspect, in a possible implementation, the advertising request processing module is further configured to obtain the at least one piece of first parameter information from the first advertising request; and the advertising request processing module is further configured to obtain the first advertising content from at least one piece of locally cached advertising content based on the first parameter information.

According to the second aspect, in a possible implementation, the advertising request processing module is further configured to obtain the at least one piece of first parameter information from the first advertising request; the advertising request processing module is further configured to obtain the first advertising information from at least one piece of locally cached advertising information based on the first parameter information; and the advertising request processing module is further configured to obtain first advertising content based on the first advertising information.

According to the second aspect, in a possible implementation, the advertising response includes at least one piece of advertising information, and the at least one piece of advertising information includes the second advertising information.

According to the second aspect, in a possible implementation, the application is further configured to determine the second advertising information from the advertising response; and the application is further configured to: obtain the second advertising content based on the second advertising information; and display the second advertising content.

According to the second aspect, in a possible implementation, the advertising response includes at least one piece of advertising information, and the at least one piece of advertising information includes the second advertising information and third advertising information.

According to the second aspect, in a possible implementation, the terminal further includes an advertising caching module, configured to: obtain, based on the second advertising information, the second advertising content and second parameter information associated with the second advertising content; obtain, based on the third advertising information, third advertising content and third parameter information associated with the third advertising content; and locally cache the second advertising content, the second parameter information, the third advertising content, and the third parameter information. The third advertising information includes a download address of the third advertising content, and the third advertising content is undisplayed advertising content.

According to the second aspect, in a possible implementation, the advertising caching module is further configured to: obtain, based on the third advertising information, third advertising content and third parameter information associated with the third advertising content, and locally cache the third advertising content and the third parameter information.

For example, the second parameter information includes one or more of the following: an advertising slot, an advertising type, an advertising form, an advertising floor price, an advertising size, and scenario information.

According to a third aspect, an embodiment of this application provides a chip system, including at least one processor and at least one interface circuit. The at least one interface circuit is configured to: perform receiving and sending functions, and send instructions to the at least one processor. When the at least one processor executes the instructions, the at least one processor performs the method according to the first aspect or any one of the implementations of the first aspect.

According to a fourth aspect, a computer-readable storage medium is provided. The computer-readable storage medium stores a computer program (which may also be referred to as instructions or code). When the computer program is executed by a terminal, the terminal is enabled to perform the method according to the first aspect or any one of the implementations of the first aspect.

According to a fifth aspect, a computer program product is provided. When the computer program product runs on a terminal, the terminal is enabled to perform the method according to the first aspect or any one of the implementations of the first aspect.

For technical effects corresponding to the second aspect to the fifth aspect and any one of the implementations of the second aspect to the fifth aspect, refer to the technical effects corresponding to the first aspect or any one of the implementations of the first aspect. Details are not described herein again.

### BRIEF DESCRIPTION OF DRAWINGS

FIG. 1 is a diagram of an advertising delivery system to which an advertising delivery method is applied according to an embodiment of this application;
FIG. 2 is a diagram of a hardware structure of a terminal according to an embodiment of this application;
FIG. 3 is a schematic flowchart 1 of an advertising delivery method according to an embodiment of this application;
FIG. 4 is a schematic flowchart 2 of an advertising delivery method according to an embodiment of this application;
FIG. 5 is a diagram of an advertising delivery scenario according to an embodiment of this application;
FIG. 6A and FIG. 6B are a schematic flowchart 3 of an advertising delivery method according to an embodiment of this application;
FIG. 7A to FIG. 7C are an architecture diagram of a system of an advertising delivery method according to an embodiment of this application; and
FIG. 8 is a diagram of a structure of a terminal according to an embodiment of this application.

### DESCRIPTION OF EMBODIMENTS

In the descriptions of embodiments of this application, unless otherwise specified, "/" means "or". For example, A/B may represent A or B. In this specification, "and/or" describes only an association relationship between associated objects and represents that three relationships may exist. For example, A and/or B may represent the following three cases: Only A exists, both A and B exist, and only B exists.

The terms "first" and "second" mentioned below are merely intended for a purpose of description, and shall not be understood as an indication or implication of relative importance or implicit indication of the number of indicated technical features. Therefore, a feature limited by "first" or "second" may explicitly or implicitly include one or more features.

In the descriptions of embodiments of this application, unless otherwise specified, "a plurality of" means two or more than two. In addition, in embodiments of this application, the term "example" or "for example" is used to represent giving an example, an illustration, or a description. Any embodiment or design scheme described as an "example" or "for example" in embodiments of this application should not be explained as being more preferred or having more advantages than another embodiment or design scheme. To be precise, use of the terms such as "example" or "for example" is intended to present a relative concept in a specific manner.

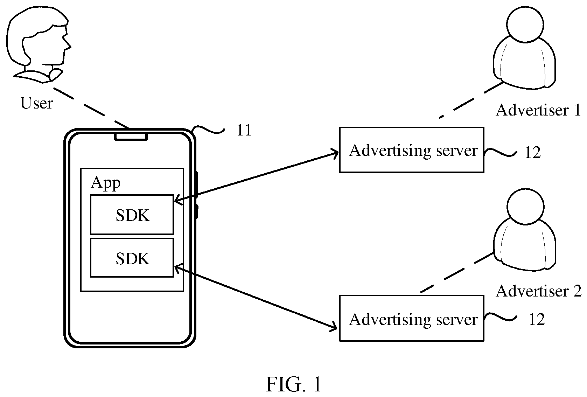

To better understand the technical solutions of this application, a specific implementation of the advertising delivery system is first described in detail. FIG. 1 is an Internet advertising delivery system according to an embodiment of this application. The Internet advertising delivery system includes a terminal 11, and one or more advertising servers 12 (FIG. 1 uses an example in which the advertising delivery system includes two advertising servers).

One or more apps can be installed on the terminal 11 (FIG. 1 uses an example in which one app is installed on the terminal 11). In a process of running a specific app, the terminal 11 can request a corresponding advertisement from the advertising server 12, and display the advertisement returned by the advertising server 12.

Specifically, the app integrates an SDK or SDKs corresponding to one or more advertising servers (FIG. 1 uses an example in which the app integrates an SDK 1 corresponding to an advertising server 1 and an SDK 2 corresponding to an advertising server 2). The app can invoke each SDK to send an advertising request to a corresponding advertising server, to request a corresponding advertisement. For example, the app includes the SDK (the SDK 1) corresponding to the advertising server 1 and the SDK (the SDK 2) corresponding to the advertising server 2. In a running process of the app, when a user performs an operation to trigger the app to display an advertisement, the app invokes an SDK to generate an advertising request. Then, the app receives an advertising response returned by the SDK and displays advertising content carried in the advertising response on a display interface of the app.

In a normal case, for each advertising display opportunity, the SDK sends one advertising request to the corresponding advertising server and receives one advertising response returned from the advertising server. For example, the SDK 1 sends one advertising request to the advertising server 1, and obtains an advertising response 1 returned by the advertising server 1; and the SDK 2 sends one advertising request to the advertising server 2, and obtains an advertising response 2 returned by the advertising server 2. The app determines a target advertising response from the returned advertising response 1 and the returned advertising response 2 according to a specific selection rule, and displays, on a terminal interface, advertising content carried in the target advertising response.

The SDK corresponding to the advertising server is an embedded advertising toolkit provided by a service provider of the advertising server to an app developer, and may be advertising development code or the like. For example, a developer of a specific app introduces advertising SDK files of a plurality of advertising servers into a development program code document. Therefore, the app integrates SDKs of the plurality of advertising servers, and interfaces with the plurality of advertising servers. Each SDK interacts with a corresponding advertising server.

For example, the SDK (namely, the SDK 1) corresponding to the advertising server 1 sends an advertising request to the advertising server 1, and receives an advertising response returned by the advertising server 1; and the SDK (namely, an SDK 2) corresponding to the advertising server 2 sends an advertising request to the advertising server 2, and receives an advertising response returned by the advertising server 2. The SDK returns a received advertising response to the app. That is, the SDK 1 returns the received advertising response to the app, and the SDK 2 returns the received advertising response to the app.

The advertising server 12 may be configured to maintain an advertising resource pool of advertisers. The advertising resource pool stores advertising content (for example, copies, images, videos, and audio that appear in advertisements) uploaded by the advertisers. For example, an advertiser 1 uploads an advertisement to the advertising server 1, and an advertiser 2 uploads an advertisement to the advertising server 2. The advertising resource pool may also store advertising information in different dimensions (for example, advertising forms, advertising types, and advertising download addresses). The advertising server 12 may further receive an advertising request sent by a corresponding SDK, and determine, from the advertising resource pool based on the advertising request, advertising content matching the advertising request. An advertising response includes advertising content and advertising information in different dimensions, and the advertising response is returned to a corresponding SDK.

The advertising response includes the advertising content and the advertising information in the different dimensions.

The advertising content means specific advertising content displayed on a display interface of the terminal 11, for example, a copy, an image, a video, or audio that appears in an advertisement. This is not limited in embodiments of this application.

The advertising information in the different dimensions means a description parameter that indicates a feature attribute of an advertisement to be played, for example, an advertising form, a name, an advertising type, and an advertising download address. This is not limited in embodiments of this application.

The following describes in detail a specific implementation of an advertising delivery method in a related technology.

Related technology 1: A terminal app integrates SDKs of a plurality of advertising servers. For each advertising display opportunity, the app invokes each SDK to send an advertising request to a same advertising server corresponding to the SDK a plurality of times, and receives a plurality of advertising responses returned by the advertising server. The app selects one of the plurality of received advertising responses as a target advertising response.

For example, when the user browses news by using a browser, there are two opportunities to display advertisements. For example, one advertisement is embedded in the news as text/image feeds, and the other advertisement is displayed at the bottom of a news page. The browser integrates three SDKs (an SDK 1, an SDK 2, and an SDK 3). Each SDK should send two advertising requests to a corresponding advertising server. In other words, the integrated SDKs in the browser send six advertising requests. Correspondingly, there are also a total of six advertising responses returned by advertising servers, and the browser selects two appropriate advertisements from the six advertising responses to display on the news page.

However, each SDK actually sends far more advertising requests to the corresponding advertising server than two advertising requests that should be sent. For example, the SDK 1 sends N advertising requests, the SDK 2 sends M advertising requests, and the SDK 3 sends O advertising requests, where N, M, and O are all integers greater than 2. In other words, the integrated SDKs in the browser totally send N+M+O advertising requests. Correspondingly, advertising servers return N+M+O advertising responses to the terminal, and the browser selects two advertisements from the N+M+O advertising responses to display.

However, in the related technology 1, this solution in which the SDK sends the advertising request to the same advertising server corresponding to the SDK a plurality of times results in an increase in consumption of terminal resources, such as user traffic. In addition, an increased number of requests processed by the advertising server may increase a workload of the advertising server.

For the foregoing problems, there is currently another related technology (which is described as a related technology 2 in this application). In this related technology, an advertising request is suppressed in a time period, to reduce consumption of resources and reduce a workload of an advertising server.

In this application, "an advertising request is suppressed" means that the advertising request is not forwarded to an advertising server.

Related technology 2: In a process in which a user uses an app, the user triggers the app to invoke an SDK to send an advertising request to an advertising server a plurality of times. After an advertising response returned by the advertising server is obtained, an advertising response returned earliest is cached. In a validity period of the cached advertising response, the cached advertising response is invoked for all advertising requests sent by the app. In this case, an advertising request sent in a subsequent time period is suppressed, that is, a subsequent advertising request does not need to be forwarded to the advertising server.

Advertisements have features such as personalization and realtimeness, and different advertising content needs to be displayed in different scenarios (for example, information displayed on a currently displayed page of a terminal, time for sending an advertising request by the terminal, a type of a network used by the terminal, and/or a geographical location of the terminal).

In the foregoing related technology 2, some advertising requests are suppressed, and resource consumption is reduced. However, there are new problems: A same advertising response is used in a time period, losing personalization and realtimeness of advertising, and reducing advertising effect.

For example, when the user watches game live streaming by using a live streaming application, there is one advertising display opportunity. The live streaming application invokes an integrated SDK to send a request to the advertising server. The advertising server returns, based on scenario information (the user is watching live streaming of a game A) included in the request, an advertising response related to the scenario information (for example, an advertisement related to the game A). After obtaining the advertising response, the terminal caches the advertising response and displays advertising content carried in the advertising response. If the user switches to shopping live streaming in a validity period of the advertising response, there is another advertising display opportunity. The terminal directly invokes the cached advertising response (the advertisement related to the game A) and displays the advertising response on a shopping live streaming interface. In this case, the advertising content displayed on the terminal interface is not closely associated with content that is currently browsed by the user, and advertising effect is greatly reduced.

To resolve problems existing in the related technologies, an embodiment of this application provides an advertising delivery method. According to the method, at least one suppression strategy is configured based on advertising-related information in different dimensions. If an advertising request triggers one or more suppression strategies, the advertising request is suppressed, that is, the advertising request does not need to be forwarded to an advertising server. Instead, an advertising response corresponding to the advertising request is returned based on a parameter carried in the advertising request. If parameters carried in different advertising requests are different, returned advertising responses may be different. Therefore, according to the method provided in this embodiment of this application, a number of times of sending an advertising request can be reduced, consumption of resources such as user traffic can be reduced, and a workload of the advertising server can be reduced. In addition, the corresponding advertising response is returned for the parameter carried in the advertising request that triggers suppression, retaining personalization and realtimeness of advertising.

In embodiments of this application, the terminal 11 may be a device having a display function, for example, a mobile phone, a tablet computer, a wearable device, a vehicle-mounted device, an augmented reality (augmented reality, AR) device\a virtual reality (virtual reality, VR) device, a notebook computer, an ultra-mobile personal computer (ultra-mobile personal computer, UMPC), a netbook, a personal digital assistant (personal digital assistant, PDA), or an artificial intelligence (artificial intelligence, AI) terminal. A specific form of the terminal is not specially limited in embodiments of this application.

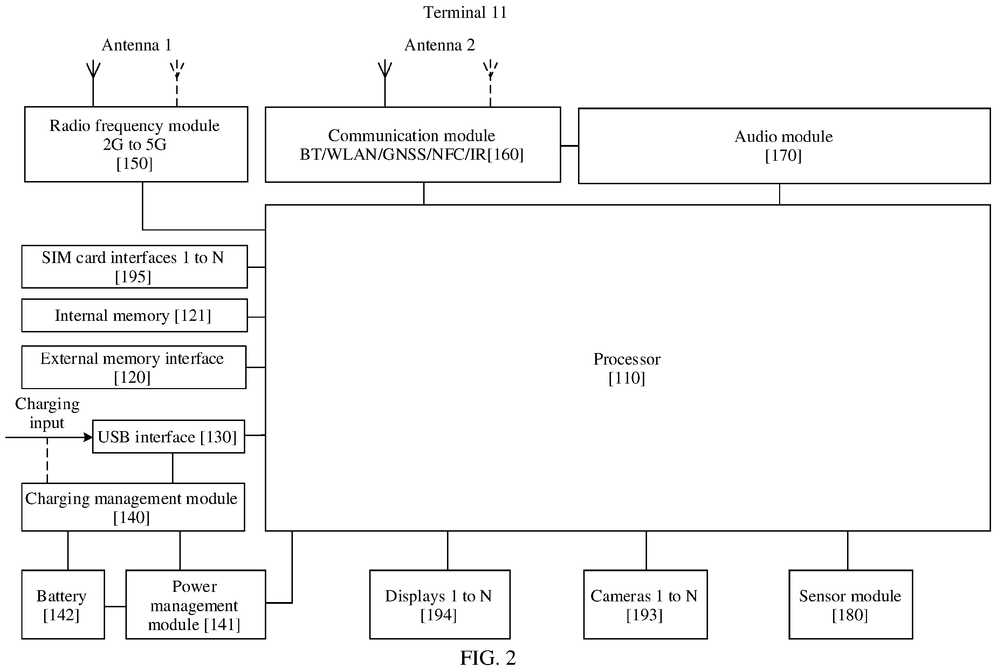

FIG. 2 is a block diagram of a structure of the terminal 11.

The terminal 11 may include a processor 110, an external memory interface 120, an internal memory 121, a USB interface 130, a charging management module 140, a power management module 141, a battery 142, an antenna 1, an antenna 2, a radio frequency module 150, a communication module 160, an audio module 170, a sensor module 180, a camera 193, a display 194, a SIM card interface 195, and the like.

A structure shown in embodiments of the present invention does not constitute a limitation on the terminal 11. The terminal 11 may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP) and/or a memory. Different processing units may be independent devices, or may be integrated into one or more processors.

A memory may be further disposed in the processor 110, and is configured to store instructions and data. In some embodiments, the memory in the processor is a cache, and may store an instruction or data that has been used or cyclically used by the processor. If the processor needs to use the instructions or the data again, the processor may directly invoke the instructions or the data from the memory. This avoids repeated access and reduces waiting time of the processor, improving system efficiency.

The USB interface 130 may be a mini USB interface, a micro USB interface, a USB type-C interface, or the like. The USB interface may be configured to connect to a charger to charge the terminal 11, or may be configured to transmit data between the terminal 11 and a peripheral device, or may be configured to connect to a headset for playing audio through the headset.

The charging management module 140 is configured to receive a charging input from a charger. The charger may be a wireless charger or a wired charger. The charging management module supplies power to the terminal device by using the power management module 141 while charging the battery.

The power management module 141 is configured to connect the battery 142, the charging management module 140, and the processor 110. The power management module receives an input of the battery and/or the charging management module, to supply power to the processor, the internal memory, an external memory, the display, and the like. The power management module may be further configured to monitor parameters such as a battery capacity and a battery health status (electric leakage or impedance).

The antenna 1 and the antenna 2 are configured to transmit and receive an electromagnetic wave signal. Each antenna in the terminal 11 may be configured to cover one or more communication frequency bands. Different antennas may be further multiplexed, to improve antenna utilization. For example, a cellular network antenna may be multiplexed as a diversity antenna of a wireless local area network. In some embodiments, the antenna may be used in combination with a tuning switch.

The radio frequency module 150 can provide a communication processing module for a wireless communication solution that is applied to the terminal 11 and that includes 2G to 5G, and the like. The radio frequency module receives an electromagnetic wave by using the antenna 1, performs processing such as filtering or amplification on the received electromagnetic wave, and transmits the electromagnetic wave to the modem for demodulation.

The communication module 160 may provide a communication processing module for a wireless communication solution that is applied to the terminal 11 and that includes a wireless local area network (wireless local area networks, WLAN), Bluetooth (Bluetooth, BT), a global navigation satellite system (global navigation satellite system, GNSS), a near field communication (near field communication, NFC) technology, an infrared (infrared, IR) technology, and the like. The communication module 160 may be one or more devices integrating at least one communication processing module. The communication module receives an electromagnetic wave by using the antenna 2, performs frequency modulation and filtering processing on an electromagnetic wave signal, and sends a processed signal to the processor.

In some embodiments, the antenna 1 and the radio frequency module of the terminal 11 are coupled, and the antenna 2 and the communication module of the terminal 11 are coupled, so that the terminal 11 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, an IR technology, and/or the like. The GNSS may include a global positioning system (global positioning system, GPS), a global navigation satellite system (global navigation satellite system, GLONASS), and/or a BeiDou navigation satellite system (BeiDou navigation satellite system, BDS), a quasi-zenith satellite system (quasi-zenith satellite system, QZSS), and/or a satellite based augmentation system (satellite based augmentation system, SBAS), and/or the like.

The display 194 is configured to display an image, a video, and the like. The display includes a display panel. The display panel may be a liquid crystal display (liquid crystal display, LCD), an organic light-emitting diode (organic light-emitting diode, organic light-emitting diode), an active-matrix organic light-emitting diode (active-matrix organic light-emitting diode, AMOLED), a flexible light-emitting diode (flex light-emitting diode, FLED), a mini-LED, a micro-LED, a micro-OLED, a quantum dot light-emitting diode (quantum dot light-emitting diodes, QLED), or the like. In some embodiments, the terminal 11 may include one or N displays, where N is a positive integer greater than 1. In this embodiment of this application, the display 194 may be configured to display advertising content.

The camera 193 is configured to capture a static image or a video. An optical image of an object is generated through the lens, and is projected onto the photosensitive element. The photosensitive element may be a charge-coupled device (charge-coupled device, CCD) or a complementary metal-oxide-semiconductor (complementary metal-oxide-semiconductor, CMOS) phototransistor. In some embodiments, the terminal 11 may include one or N cameras, where N is a positive integer greater than 1.

The external memory interface 120 may be configured to connect to an external memory card, for example, a micro SD card, to extend a storage capability of the terminal 11. The external memory card communicates with the processor by using the external memory interface, to implement a data storage function. For example, files such as music and videos are stored in the external storage card.

The internal memory 121 may be configured to store computer-executable program code. The executable program code includes instructions. The processor 110 runs the instruction stored in the internal memory 121, to execute various function applications and data processing of the terminal 11. The memory 121 may include a program storage area and a data storage area. The program storage area may store an operating system, an application required by at least one function, and the like. The data storage area may store data, and the like created during use of the terminal 11. In addition, the memory 121 may include a high-speed random access memory, and may further include a non-volatile memory such as at least one magnetic disk storage device, a flash memory, another volatile solid-state storage device, or a universal flash storage (universal flash storage, UFS). The memory in embodiments of the present invention may store a suppression strategy configured by an advertising server.

The audio module 170 is configured to convert digital audio information into an analog audio signal for output, and is also configured to convert analog audio input into a digital audio signal. The audio module may be further configured to: encode and decode an audio signal.

The sensor module 180 of the terminal 11 may specifically include: a pressure sensor, a distance sensor, an ambient light sensor, a fingerprint sensor, a temperature sensor, a touch sensor, and the like. The touch sensor, also referred to as a "touch panel", may be disposed on the display, and is configured to detect a touch operation performed on or near the touch sensor. The terminal 11 may further include components such as a battery 142 and a SIM card interface 195. This is not limited in embodiments of this application.

For ease of understanding, the following specifically describes, with reference to the accompanying drawings, an advertising delivery method provided in an embodiment of this application.

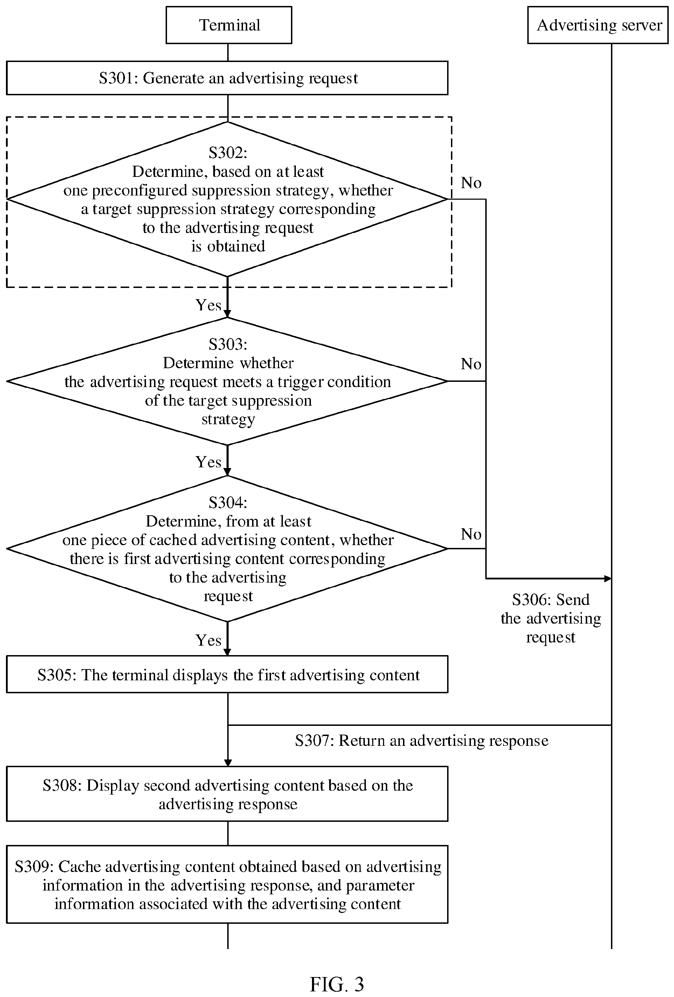

In some embodiments of this application, FIG. 3 is a flowchart of an advertising delivery method according to an embodiment of this application. The method includes the following steps.

S301: A terminal generates an advertising request.

In some embodiments of this application, when the terminal detects that a user starts a specific app or enters a specified interface of a specific app, if there is a specified advertising slot on a startup interface or the specified interface that the user is about to enter, it may be considered that the terminal currently needs to display an advertisement.

For example, when the terminal detects that the user taps an icon of a player application on a home screen, and there is a specified advertising slot on a player startup page, the terminal may invoke an application programming interface (application programming interface, API) of the player application to start the player application, and the terminal simultaneously generates an advertising request for a current advertisement to be played.

The advertising request may carry parameter information in different dimensions. The parameter information in the different dimensions includes one or more of the following: an application identifier (pkgname) of a current app, an advertising slot (slotid), an advertising type (adtype), an advertising form (adform), and an advertising floor price (adfloorprice).

Optionally, the parameter information in the different dimensions further includes scenario information, terminal device information, and the like.

The application identifier (which may also be described as an application package name) of the current app may be a unique identity of the current app, and is used to identify different apps.

The advertising slot may uniquely indicate a specific location of a current advertisement to be played that is displayed on a current terminal. The terminal can have a plurality of advertising slots, and a same advertising slot has a plurality of forms. For example, an app developer arranges, based on statistical running data such as user traffic data, an advertising slot at a key node at which a user uses an app. For example, the app arranges the advertising slot based on an operation performed by the user on the app, like starting, pausing, or exiting the app.

The advertising type may include: Based on industries to which apps belong, advertising types may be classified into e-commerce app advertisements, news app advertisements, video app advertisements, and the like. The advertising types can also be classified based on advertising content into entertainment advertisements, game advertisements, sports advertisements, shopping advertisements, news advertisements, and the like. A classification manner of advertising types is not limited in this embodiment of this application.

The advertising form may include the following.

Splash (splash) advertisement: The splash advertisement is a startup page advertisement that appears when an app is loaded at startup, and displays an image or video for a fixed time period. After display is complete, the splash advertisement is automatically closed, and a home page of the app is displayed. For example, when a user taps an icon of an app 1 on a terminal, when the app 1 is loaded at startup, a shopping advertisement is displayed on a terminal interface for 3 seconds, and the advertisement is automatically closed after 3 seconds. The terminal interface displays a home page of the app 1.

Banner (banner) advertisement: The banner advertisement is displayed on the top, middle, or bottom of each page of an app in a form of text or image. For example, when a user browses news information using a news app, the advertisement is displayed in a form of image or text link on the top or bottom of the terminal interface.

Interstitial (interstitial) advertisement: The interstitial advertisement is a triggered advertisement. After a user performs a corresponding operation, a half-screen or full-screen advertisement in a form of image or animation pops up. For example, if the user taps a pause key when watching a video, an advertisement in the form of image pops up on a video pause interface. After closing the advertisement, the user can continue to watch the video only after tapping the pause key again.

Incentive (incentive) advertisement: The incentive advertisement uses an incentive to enable a user to accept the advertisement or perform a specified action. For example, if the user does not want to purchase membership when using a beauty app, the user can watch a video advertisement to obtain a temporary membership privilege.

Feeds (feeds) advertisement: The feeds advertisement is integrated with daily content of an app, and is displayed in a form of text link or image gallery. For example, in a post that shares mobile phone evaluation, shopping advertisements of various mobile phones are displayed in the form of image gallery.

Search (search) advertisement: The search advertisement is a triggered advertisement that appears in various forms in search results after a user searches for a keyword. For example, if the user enters football in a search box of a browser, a shopping advertisement of the football can be displayed in the search result.

The advertising floor price may be a lowest transaction price of advertising requested by a terminal.

Optionally, the scenario information includes at least one or more of the following: time (time) for generating an advertising request by a terminal, a location (location) of the terminal device, a type of a network (networktype) currently connected to the terminal device, current terminal interface information, and the like.

The time for sending an advertising request by the terminal may be specific time at which the terminal generates the advertising request, or a time period in which the terminal generates the advertising request. Because specific delivery time is preset for some advertisements, only a specific advertisement may be delivered in a specific time period. Different advertisements may be displayed on the terminal in different time periods.

The location of the terminal device may be geographical location information of the terminal device when the terminal sends the advertising request.

The type of the network currently connected to the terminal device may be a type of a network currently used by the terminal device when the terminal sends the advertising request, for example, 4G, 5G, or a wireless network (wireless-fidelity, WI-FI).

The current terminal interface information may be information currently displayed on a terminal interface.

Optionally, the terminal device information may include: a terminal device type (devicetype), an operating system version number (version) of the terminal, a terminal device maker (maker), a terminal device model (model), an operating system language (language) used by the terminal, or an open anonymous device identifier (open anonymous device identifier, OAID).

The terminal device type may be a type of the terminal device, including a mobile phone, a foldable screen, a tablet computer, a personal computer, and the like.

Further, the advertising request may include an advertising slot width (width) and an advertising slot height (height). The advertising slot width and the advertising slot height are usually less than a width and a height of a display of the terminal.

The advertising request carries the parameter information in a plurality of dimensions, so that the terminal can determine a suppression strategy matching the advertising request, and detect whether the advertising request triggers request suppression. In addition, it is convenient for an advertising server to quickly determine an advertising response that highly matches the advertising request.

For example, the advertising request generated by the terminal is as follows:

```
     {
          "pkgname": "com.huawei.game", //An application identifier is com.huawei.game
          "slotid": "1", //Advertising slot
          "width": 1080, //An advertising slot width is 1080
          "height": 200, //An advertising slot height is 200
          "adform": 2, //An advertising form is a banner advertisement
          "adfloorprice": 3, //An advertising floor price is 3 yuan
          "time": 10, //Time for generating an advertising request is 10:00
          "location": "{lat: -55.45, long: -43.12, r: 294200}" //Device location
          "networktype": 1, //A device network type is 4G
          "devicetype": 4, //A device type is a mobile phone
          "version": "4.4.2", //An operating system version number is 4.4.2
          "maker": "HUAWEI", //A device maker is HUAWEI
          "model": "HUAWEI MT2-C00", //A device model is HUAWEI MT2-C00
          "language": "zh", //An operating system language is zh (Chinese)
          "oaid": " bboo61ee-d3ae-4a45-8f59-eefd716feff7", //Open anonymous device identifier
     }
```

In some embodiments of this application, the advertising request may further include user behavior data recorded by the terminal, for example, a video type preferred by the user, and a use habit of the user, so that the advertising server determines an advertising response conforming to user behavior based on the advertising request.

S302: The terminal determines, based on at least one preconfigured suppression strategy, whether a target suppression strategy corresponding to the advertising request is obtained.

It should be noted that step S301 and step S302 may be performed in an order according to an actual requirement. S302 is first performed, the terminal periodically sends a suppression strategy obtaining request to the advertising server, the advertising server returns the at least one configured suppression strategy to the terminal in response to the suppression strategy obtaining request, and then S301 is performed. Alternatively, S301 is first performed, and the terminal sends a suppression strategy obtaining request to the advertising server in response to the advertising request.

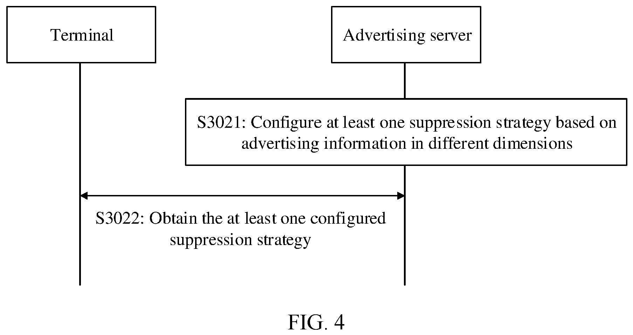

Optionally, refer to FIG. 4. That the terminal preconfigures the at least one suppression strategy in step S302 may be specifically implemented as the following steps: S3021 and S3022.

S3021: The advertising server configures the at least one suppression strategy based on advertising information in different dimensions.

In this embodiment of this application, the suppression strategy is obtained through configuration based on the advertising information in the different dimensions. The information in the different dimensions includes one or more of the following: an advertising slot, an advertising type, an advertising form, an advertising floor price, a request number (number), a time window (time window), scenario information, and terminal device information.

For the advertising slot, advertising type, advertising form, advertising floor price, scenario information, and terminal device information, refer to the descriptions of the parameter information in the different dimensions in step S301.

The request number may be a number of times of sending an advertising request by the terminal in a specific time period.

The time window can be a sliding time window, and can frame a time series based on a specified unit length, to calculate a statistical indicator in the frame, for example, a request number.

The suppression strategy may include a suppression condition and a suppression method. An advertising request that meets the suppression condition is suppressed according to the suppression method.

In some embodiments of this application, the advertising server configures, from different advertising dimensions, the at least one suppression strategy for the information in the different dimensions.

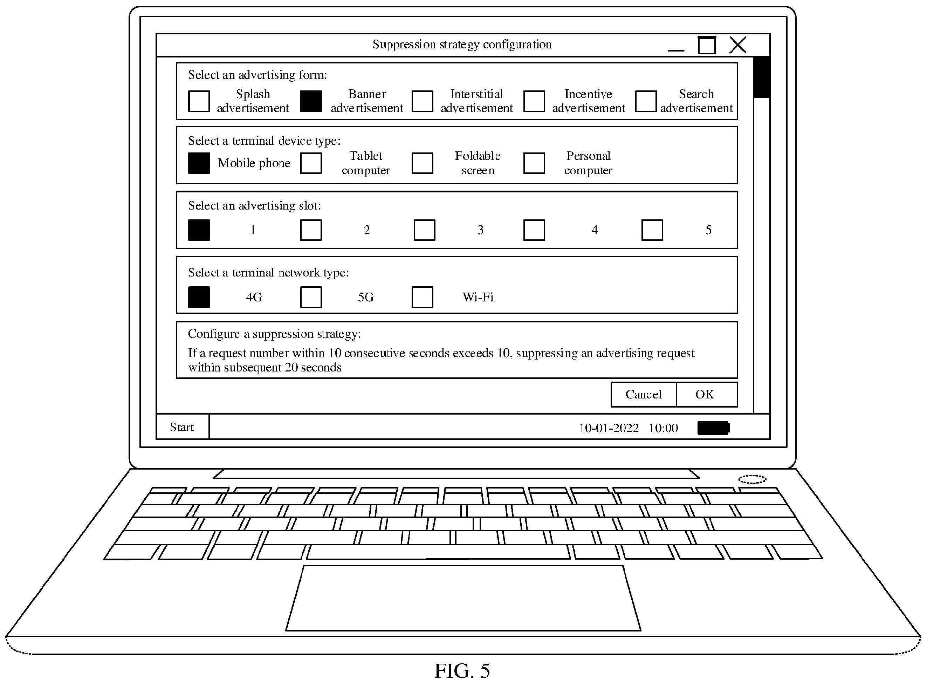

In a possible implementation, the advertising server displays a configuration interface. As shown in FIG. 5, the configuration interface includes advertising-related options in different dimensions. An operator of the advertising server may randomly combine information in the dimensions (including at least information in one dimension) based on the options provided by the configuration interface, and configure a corresponding suppression strategy based on the combined information in the dimensions. For example, the operator of the advertising server selects information in four dimensions, namely, a banner advertisement, a mobile phone, an advertising slot 1, and a 4G network, and correspondingly configures a suppression strategy for the combined information in the dimensions.

In another possible implementation, the advertising server analyzes historical data (for example, a received advertising request, and advertising publishing effect) collected by the advertising server from different advertising dimensions, and configures a suppression strategy based on an analysis result. If the analysis result is that advertising publishing effect of a specific advertising request is better, suppression on the advertising request is reduced. If advertising publishing effect of one specific advertisement is poorer, suppression on the advertising request is increased.

For example, the advertising server determines, based on historical data analysis, that in advertising requests initiated by the terminal app in a time period from 9:00 to 10:00 in the evening, an advertising request of a shopping app is sent a largest number of times and has better advertising effect, and an advertising request of a news app is sent a smallest number of times and has poorer advertising effect. In this case, a suppression strategy that the advertising server specifies for the advertising requests initiated by the terminal from 9:00 to 10:00 in the evening may be as follows: For an advertising request sent by the shopping app in the time period from 9:00 to 10:00 in the evening, if a number of times of sending a request in five consecutive seconds exceeds 10, an advertising request sent by the shopping app in subsequent two seconds is suppressed. For an advertising request sent by the news app in the time period from 9:00 to 10:00 in the evening, if a number of times of sending a request in five consecutive seconds exceeds 5, an advertising request sent by the news app in subsequent 10 seconds is suppressed.

Optionally, a configuration manner of the suppression strategy includes: randomly integrating the information in the different dimensions, and configuring a suppression strategy for the integrated information, to obtain the suppression strategy. Alternatively, a suppression strategy is formulated for each dimension, and suppression strategies in different dimensions are randomly integrated to obtain the suppression strategy.

For example, the suppression strategy is determined and obtained based on information in an advertising form dimension. An interstitial advertisement is used as an example. The interstitial advertisement has the following features: The interstitial advertisement is highly exposed, and capable of attracting user attention, but potentially causes user dislike (interrupting a normal operation of using an app by the user). The user may immediately close the advertisement, and visibility of the advertising is moderate. A specified suppression strategy may be as follows: For the interstitial advertisement, if a number of times of sending a request in five consecutive seconds exceeds 5, an advertising request of this advertising form in subsequent 10 seconds is suppressed. In other words, for the interstitial advertisement, a suppression condition is: whether the number of times of sending the request in five consecutive seconds exceeds 5; and a suppression method is: suppressing the advertising request of this advertising form in the subsequent 10 seconds.

For another example, based on an example shown in FIG. 5, the suppression strategy is obtained based on information in four dimensions: the advertising form, the terminal device type, the advertising slot, and the terminal network type. For a case in which the advertising form is a banner (banner) advertisement, the terminal device type is a mobile phone, the advertising slot is 1, and the terminal network type is a 4G network, a suppression condition of triggering request suppression is set to: A request number in 10 consecutive seconds exceeds 10. A suppression method is: suppressing an advertising request of a banner advertisement with the advertising slot 1 on the 4G network in subsequent 20 seconds.

For a case in which the advertising form is a banner (banner) advertisement, the terminal device type is a mobile phone, the advertising slot is 1, and the terminal network type is a Wi-Fi network, considering that traffic consumed in the Wi-Fi network is far less than that consumed in the 4G network, a suppression condition for triggering a request is set to: A request number in 10 consecutive seconds exceeds 20. A suppression method is: suppressing an advertising request of a banner advertisement with the advertising slot 1 on the Wi-Fi network in subsequent five seconds.

The advertising server configures the at least one suppression strategy based on the advertising information in the different dimensions, so that the terminal manages the advertising request based on the suppression strategy. This reduces a number of times of sending an advertising request and reduces a workload of the advertising server.

S3022: The terminal obtains the at least one suppression strategy configured by the advertising server.

**In** a possible implementation, after configuring the suppression strategy, the advertising server delivers the suppression strategy to the terminal, so that the terminal stores the suppression strategy.

**In** another possible implementation, the terminal periodically sends a suppression strategy obtaining request to the advertising server, the advertising server returns the at least one configured suppression strategy to the terminal in response to the suppression strategy obtaining request.

In still another possible implementation, when the terminal needs to display an advertisement, for example, when the terminal initiates an advertising request, the terminal sends a suppression strategy obtaining request to the advertising server, and the advertising server returns the at least one configured suppression strategy to the terminal in response to the suppression strategy obtaining request.

In still another possible implementation, when the terminal needs to display an advertisement, for example, when the terminal initiates an advertising request, the terminal obtains, from the advertising server based on parameter information in at least one dimension that is carried in the advertising request, a suppression strategy corresponding to the advertising request.

Optionally, the advertising server may update the suppression strategy based on real-time data of the advertising server, so that the terminal obtains the updated suppression strategy in time, and manages advertising delivery based on the updated suppression strategy, to improve accuracy.

The terminal obtains in time the suppression strategy configured by the advertising server, processes a generated advertising request based on the suppression strategy, and manages advertising delivery. This can reduce consumption of resources such as user traffic.

The terminal obtains the suppression strategy by using S3021 and S3022. In this case, when initiating the advertising request, the terminal may perform a processing operation on the advertising request based on the obtained suppression strategy.

In a possible implementation, that the terminal obtains, based on at least one preconfigured suppression strategy, a target suppression strategy corresponding to the advertising request includes: The terminal parses the advertising request, and determines the parameter information in the different dimensions that is carried in the advertising request. The parameter information in the different dimensions that is carried in the advertising request is compared piece by piece with the information in the different dimensions that is included in the at least one suppression strategy preconfigured by the terminal, and a suppression strategy matching the information in the dimensions carried in the advertising request is used as the target suppression strategy of the current advertising request.

If the target suppression strategy corresponding to the advertising request is obtained, the advertising request is processed based on the target suppression strategy, that is, S303 is performed. If the target suppression strategy is not obtained, steps S306 to S308 are performed.

For example, the terminal determines, through parsing, the information in the dimensions carried in the advertising request includes: An advertising slot is 1, an advertising form is a banner (banner) advertisement, a device type is a mobile phone, and a device network type is 4G. After the parameter information in the different dimensions that is carried in the advertising request is compared piece by piece with the information in the different dimensions that is included in the at least one suppression strategy preconfigured by the terminal, the terminal determines that a matched target suppression strategy is as follows: For an advertising request of a banner advertisement with the advertising slot 1 on the 4G network, if a request number in 10 consecutive seconds exceeds 10, an advertising request of the banner advertisement with the advertising slot 1 on the 4G network in subsequent 20 seconds is suppressed. If the target suppression strategy corresponding to the advertising request is obtained, S303 is performed. If the target suppression strategy corresponding to the advertising request is not obtained, S306 to S308 are performed.

The terminal determines the target suppression strategy from the preconfigured suppression strategy based on the advertising request, and processes the advertising request based on the target suppression strategy, improving accuracy of advertising delivery management.

S303: The terminal determines whether the advertising request meets a trigger condition of the target suppression strategy.

Optionally, a result of determining whether the advertising request meets the trigger condition of the target suppression strategy by the terminal includes the following several cases:
Case A: If the advertising request meets the trigger condition of the target suppression strategy, the terminal determines that the advertising request triggers request suppression, and suppresses the advertising request according to a suppression method in the target suppression strategy.
Case B: If the advertising request does not meet the trigger condition of the target suppression strategy, the terminal determines that the advertising request does not trigger request suppression.

Optionally, the terminal records an actual number of times of sending an advertising request based on a suppression condition of the target suppression strategy, and compares a number of times of sending a request in the suppression condition with the actual number of times of sending a request. If the actual number of times of sending a request is greater than or equal to the number of times of sending a request in the suppression condition, it indicates that the advertising request meets the trigger condition of the target suppression strategy, and S304 is performed. If the actual number of times of sending a request is less than the number of times of sending a request in the suppression condition, it indicates that the advertising request does not meet the trigger condition of the target suppression strategy, and steps S306 to S308 are performed.

For example, based on the foregoing example shown in FIG. 5, the terminal determines that the suppression condition of the target suppression strategy is that the request number in 10 consecutive seconds exceeds 10, and the suppression method is: suppressing the advertising request of the advertising slot 1 in the 4G network in subsequent 20 seconds. The actual number of times of sending the advertising request is recorded based on the suppression condition. If the actual number of times of sending an advertising request is 12 in 10 consecutive seconds, that is, a request number of a banner advertisement with the advertising slot 1 of the mobile phone on the 4G network in 10 consecutive seconds exceeds 10 in the target suppression strategy, the triggering condition of the target suppression strategy is met. In this case, the terminal determines that the advertising request triggers request suppression, suppresses the advertising request in subsequent 20 seconds, and performs step S304.

For another example, if the actual number of times of sending an advertising request is 5 in 10 consecutive seconds, that is, a request number of a banner advertisement with the advertising slot 1 of the mobile phone on the 4G network in 10 consecutive seconds exceeds 10 in the target suppression strategy, the triggering condition of the target suppression strategy is not met. In this case, the terminal determines that the advertising request does not trigger request suppression, and performs steps S306 to S308.

The terminal determines, based on the target suppression strategy, whether the current advertising request triggers request suppression, to accurately manage the advertising request. The advertising request that triggers request suppression is suppressed based on the target suppression strategy, and the advertising request is not forwarded to the advertising server, to reduce an amount of data exchanged between the terminal and the advertising server.

S304: The terminal determines, from at least one piece of cached advertising content, whether there is first advertising content corresponding to the advertising request.

Information in different dimensions that corresponds to the first advertising content is the same as the parameter information in different dimensions that is carried in the advertising request.

In a possible implementation, the terminal uses the parameter information in the different dimensions that is carried in the advertising request as a key value, to search the at least one piece of locally cached advertising content, and determines, based on a search result, the first advertising content corresponding to the advertising request. If advertising content with same information in dimensions is found, the advertising content is determined as the first advertising content, and S305 is performed. If the advertising content with the same information in the dimensions is not found, S306 to S308 are performed.

Alternatively, the parameter information in the different dimensions that is carried in the advertising request is compared piece by piece with corresponding information in different dimensions that is in the at least one piece of advertising content, to determine the first advertising content corresponding to the advertising request.

Different advertising requests carry different parameter information, and corresponding first advertising content obtained from a cache is different.

For example, the information in the dimensions carried in the advertising request by the terminal is: An advertising slot is 1, an advertising form is a banner (banner) advertisement, a device type is a mobile phone, and a device network type is 4G. The information in the dimensions is compared with the information in different dimensions that is included in the at least one piece of advertising content. If advertising content 1 that an advertising slot is 1, an advertising form is a banner advertisement, a device type is a mobile phone, and a device network type is 4G is obtained from the cached advertising content, the advertising content 1 is used as the first advertising content, and S305 is performed. If advertising content that an advertising slot is 1, an advertising form is a banner advertisement, a device type is a mobile phone, and a device network type is 4G is not obtained, S306 to S308 are performed.

Optionally, based on obtaining advertising content corresponding to the advertising request based on the information in the dimensions carried in the advertising request, the terminal may further obtain advertising content based on user association data recorded by the terminal. In other words, the advertising content is obtained based on both the information in the dimensions carried in the advertising request and the user association data recorded by the terminal. The user association data includes user behavior data, user data obtained through big data analysis, and the like. For example, the user association data may be an advertising type previously viewed by the user, a video type, a music type, or a game type preferred by the user, a routine of the user, a time period in which the user uses the terminal device (for example, a time period in which an application on the terminal is frequently used), a use habit of the user (for example, applications frequently used by the user), and a search record of the user. In this way, advertising content that better matches a user requirement is determined based on the information in the advertising request and the user behavior data, improving user experience.

For another example, the information in the dimensions carried in the advertising request by the terminal is: An advertising slot is 1, an advertising form is a banner (banner) advertisement, a device type is a mobile phone, and a device network type is 4G. It is assumed that game content is browsed when the terminal generates the advertising request. If advertising content 2 that an advertising slot is 1, an advertising form is a banner advertisement, a device type is a mobile phone, a device network type is 4G, and an advertising type is a game is obtained from the cached advertising content based on the information in the dimensions carried in the advertising request and association information generated when the terminal generates the advertising request, the advertising content 2 is used as the first advertising content.

For the advertising request that triggers request suppression, the advertising content that is the same as the information in the dimensions of the advertising request is determined from the cached advertising content based on the parameters in the different dimensions that is carried in the advertising request, to ensure that an advertisement finally presented on the terminal interface meets advertising requested, retaining personalization of advertising.

S305: The terminal displays the first advertising content.

After obtaining the first advertising content, the terminal displays the first advertising content on the terminal interface.

S306: The terminal sends the advertising request to the advertising server.

Optionally, the terminal may send the advertising request to the advertising server based on a network protocol such as a hypertext transfer protocol (HTTP) or a security-oriented HTTP channel (HTTPS).

For example, the terminal sends the advertising request to the advertising server by using a JavaScript object tag (javaScript object notation, JSON) message format in the HTTP.

In some embodiments of this application, after the advertising server receives the advertising request, the advertising server may further predict a future advertisement to be played that may be displayed on the terminal in the future.

Specifically, the advertising server may further predict, based on the user behavior data carried in the advertising request, the future advertisement to be played that may be displayed on the terminal in the future.

For example, the user behavior data may be the search record of the user, and therefore the advertising server may determine, based on the search record of the user, target information that is recently concerned by the user, for example, a car, a specific brand of clothing, or food preferred by the user. In this case, the advertising server may use an advertisement that is related to the target information and that is in an advertising resource pool as the future advertisement to be played.

It can be learned that in this embodiment of this application, when sending the advertising request to the advertising server, the terminal can include, in the advertising request, at least one of the following information: the user behavior data, the terminal device information, and a current application identifier that triggers the advertising request. In this way, the advertising server may determine, based on the foregoing information, a future advertisement to be played that is highly required by the user and that has a high probability of being tapped on the terminal in the future, to increase a recommendation success rate of advertising, and improve user experience when the user uses an app.

An advertising request that does not meet the suppression strategy is sent to the advertising server, and a latest advertising response is obtained from the advertising server, to ensure realtimeness of advertising.

S307: The terminal receives the advertising response sent by the advertising server.

In some embodiments of this application, after receiving the advertising request, the advertising server may compare, piece by piece, the parameter information in the different dimensions that is carried in the advertising request with advertising information in different dimensions that is in the advertising resource pool of the advertising server. The advertising server integrates advertising content that meets each dimension parameter in the advertising request and corresponding information in different dimensions into the advertising response. The advertising server returns the advertising response to the terminal.

Optionally, the advertising response may include a plurality of pieces of advertising content that meet the advertising request.

Correspondingly, the terminal receives the advertising response sent by the advertising server.

For example, the information in the dimensions carried in the advertising request includes: An advertising slot is 1, an advertising form is a banner (banner) advertisement, a device type is a mobile phone, and a device network type is 4G. In this case, the advertising server determines advertising content that matches the information in the dimensions and that is in the advertising resource pool.

Similar to a message format of the advertising request, the advertising response sent by the advertising server may also be in a JSON message format.

For example, the advertising response may include a return value (retcode) of the advertising response, and different advertising information (adinfo). The advertising information includes advertising-related information in different dimensions, for example, a download address, an advertising form, an advertising floor price, an advertising size, and scenario information. When the advertising content matching the advertising request is not successfully found, this response message may further include a reason (reason) for a response failure.

The advertising response includes parameters corresponding to the advertising request, such as an advertising slot (slotid), an advertising type (adtype), a creative type (creativetype) of advertising, an advertising content ID (contentid), and scenario information. The creative type of the advertising may include types such as text advertising, image advertising, image-text advertising, and graphics interchange format (GIF) advertising.

Further, the advertising response may further include parameters such as an advertising content download address (html), an advertising content summary value (sha256), and an advertising interaction type (interactiontype). The advertising interaction type may include interaction types such as no response after a user tap, opening a related web page after a user tap, downloading an application after a user tap, and entering an application after a user tap.

For example, the advertising response sent by the advertising server to the terminal includes a plurality of pieces of advertising information. Code of the advertising request generated by the terminal in S301 is used as an example. An advertising response message returned by the advertising server in response to the advertising request is as follows:

```
     {
     "retcode": 206, //Return value
      "adinfo": //Advertising information 1
        {
             "slotid": "1", //Advertising slot
             "interactiontype": 3, //An interaction type is:
 entering an application after a user tap
             "adtype": 5, //An advertising type is a game
             "networktype": 1, //A device network type is 4G
             "creativetype": 2, //A creative type is image advertising
     "html": " http://cs.op.hicloud.com/contserver/data/98BE13F2CD19D40.jpg", //Download
 address 1
             "sha256": "45hsfrfswgh4345435" //Advertising content summary value
     }
      "adinfo": //Advertising information 2
        {
             "slotid": "1", //Advertising slot
             "interactiontype": 3, //An interaction type is:
entering an application after a user tap
             "adtype": 5, //An advertising type is a game
             "networktype": 1, //A device network type is 4G
             "creativetype": 2, //A creative type is image advertising
     "html": " http://cs.op.hicloud.com/contserver/data/98B1E3F2CD1GHR4.jpg", //Download
 address 2
             "sha256": "568gwe4235gdgfdh45" //Advertising content summary value
     }
     "adinfo": //Advertising information 3
        {
             "slotid": "1", //Advertising slot
             "interactiontype": 3, //An interaction type is:
entering an application after a user tap
             "adtype": 5, //An advertising type is a game
             "networktype": 1, //A device network type is 4G
             "creativetype": 2, //A creative type is image advertising
     "html": " http://cs.op.hicloud.com/contserver/data/345ETF89DFFw23KL.jpg", //Download
 address 3
             "sha256": "1346590fdgfhj8531f" //Advertising content summary value
     }
     }
```

The advertising request generated by the terminal carries advertising slot information, an advertising form of banner advertisement, an advertising floor price of 3 yuan, a device type of mobile phone, a network type of 4G, and the like. Therefore, three pieces of advertising information (advertising information 1, advertising information 2, and advertising information 3) in the advertising response returned by the advertising server based on the information carried in the advertising request meet the foregoing information in the dimensions. An advertisement corresponding to each piece of advertising information is a game-related image advertisement. For example, when the user uses a huawei game application on the mobile phone on the 4G network, in a running process of the huawei game, a banner advertisement is displayed in the advertising slot 1, and advertising content displayed in the banner advertisement may be a game image advertisement corresponding to any one of the three pieces of advertising information carried in the advertising response.

S308: The terminal displays second advertising content based on the advertising response.

The advertising response includes one or more pieces of advertising content.

After receiving the advertising response sent by the advertising server, the terminal extracts one piece of advertising content from the advertising response as the second advertising content according to a preset rule, and displays the second advertising content on the terminal interface.

For example, based on the response message returned by the advertising server in S307, the advertising response carries the three pieces of advertising information (the advertising information 1, the advertising information 2, and the advertising information 3). If the preset rule is displaying an earliest obtained advertisement, the terminal obtains corresponding advertising content based on the response message and a download address in the advertising information 1, and displays the advertising content as the second advertising content on the terminal interface. In other words, the second advertising content displayed by the terminal is an image advertisement whose download address is " http://cs.op.hicloud.com/contserver/data/98BE13F2CD19D40.jpg".

Optionally, the terminal may further perform the following step S309.

S309: The terminal caches the advertising content obtained based on the advertising information in the advertising response, and parameter information associated with the advertising content.

In a possible implementation, the terminal obtains advertising content corresponding to each piece of advertising information based on the advertising information in the advertising response, and locally caches each piece of advertising content and parameter information associated with the advertising content. The parameter information associated with each piece of advertising content is generated based on advertising information corresponding to the advertising content.

For example, based on the response message returned by the advertising server in S307, the terminal obtains advertising content corresponding to the three pieces of advertising information carried in the advertising response (obtaining advertising content 1 based on a download address 1 in the advertising information 1, obtaining advertising content 2 based on a download address 2 in the advertising information 2, and obtaining advertising content 3 based on a download address 3 in the advertising information 3), and obtains, based on the advertising information, parameter information associated with the advertising content (that is, generating parameter information 1 based on the advertising information 1, generating parameter information 2 based on the advertising information 2, and generating parameter information 3 based on the advertising information 3). The terminal associates and locally stores the advertising content 1 with the parameter information 1, the advertising content 2 with the parameter information 2, and the advertising content 3 with the parameter information 3.

In another possible implementation, the terminal obtains advertising content corresponding to each piece of advertising information based on the advertising information in the advertising response, and locally caches undisplayed advertising content and parameter information associated with the advertising content. In this case, the undisplayed advertising content is cached, to subsequently display the previously undisplayed advertising content.

For example, based on the foregoing example of displaying the advertising content 1 corresponding to the advertising information 1 in S308, the terminal associates and locally stores the advertising content 2 with the parameter information 2, and the advertising content 3 with the parameter information 3.

Optionally, the terminal caches the advertising content and the parameter information associated with the advertising content in the following implementations.

In a possible implementation, the terminal extracts information in at least one dimension included in the advertising information in the advertising response, combines the information into personalized cache information of the advertising content to be cached, and uses the personalized information in the dimensions as a keyword for identifying the advertising content, to identify the advertising content to be cached. The terminal caches the advertising content based on an association relationship between the keyword (namely, the personalized information in the dimensions) and information related to the advertising content.

For example, the terminal has two advertising display opportunities in a same advertising slot. After determining that no request suppression is triggered, the terminal sends two advertising requests (including information in the dimensions: an entertainment advertisement, and a 4G network) to the advertising server, to obtain two advertising responses (an advertising response 1, and an advertising response 2) returned by the advertising server. Each advertising response carries one piece of advertising information (the advertising response 1 carries the advertising information 1, and the advertising response 2 carries the advertising information 2). The advertising information 1 includes: a download address 1, an advertising type is an entertainment advertisement, a terminal device network is 4G, an advertising content ID 1, and an advertising slot. The advertising information 2 includes: a download address 2, an advertising type is an entertainment advertisement, a terminal device network is 4G, an advertising content ID 2, and an advertising slot. An advertising type and a terminal device network included in advertising information is the same as the information in the dimensions included in the advertising request, and advertising slots in the advertising information 1 and the advertising information 2 are also the same.

The terminal obtains the advertising content 1 based on the download address 1 in the advertising information 1, and obtains the advertising content 2 based on the download address 2 in the advertising information 2. The advertising content 1 and the advertising content 2 are an advertisement finally presented on the terminal interface. The terminal extracts information in each dimension included in the advertising information in each advertising response, and forms a keyword to identify advertising content. The keyword is used to uniquely identify the cached advertising content. Further, the information in the dimensions identifying the advertising content may further include a local storage location of the advertising content. A specific form may be: { entertainment-4G}- { advertising content ID 1, local storage location 1}, and {advertising content ID 2, local storage location 2}. In this case, entertainment and 4G are used to form the keyword to identify the advertising content, and the advertising content may be directly obtained based on the local storage location in the association relationship. When information in the dimensions included in a subsequently suppressed advertising request is entertainment and 4G, the corresponding advertising content may be obtained by using stored information.

In another possible implementation, the terminal extracts information in at least one dimension included in the advertising information in the advertising response, combines the information into personalized cache information of the advertising content to be cached, uses a keyword to identify the personalized information in the dimensions according to a preset rule, and caches the advertising content based on an association relationship between the keyword, the personalized information in the dimensions, and information related to the advertising content.

For example, as described in the foregoing example, if the terminal sends two advertising requests (information in the dimensions included in an advertising request 1 is an entertainment advertisement and a 4G network, and information in the dimensions included in an advertising request 2 is a game advertisement and a 4G network), information in the dimensions that is included in advertising information 1 carried in an advertising response 1 returned by the advertising server and that is obtained by the terminal is an entertainment advertisement and a 4G network, and information in the dimensions included in advertising information 2 carried in the other advertising response 2 is a game advertisement and a 4G network. The information included in the advertising information is as described in the foregoing example. After obtaining the advertising content, the terminal sets a keyword label for the combined personalized information in the dimensions, for example, entertainment-4G is C, and game-4G is D. A specific form may be: { C}- {entertainment-4G}-{advertising content ID 1, local storage location 1}, and {D}-{game-4G}-{ advertising content ID 2, local storage location 2}.

For example, based on the response message returned by the advertising server in S307, the terminal displays the advertising content 1 whose download address is http://cs.op.hicloud.com/contserver/data/98BE13F2CD19D40.jpg.

When caching the advertising content carried in the advertising response, the terminal obtains the respectively corresponding advertising content 1, advertising content 2, and advertising content 3 based on the advertising information 1, advertising information 2, and advertising information 3 included in the response message returned by the advertising server, and integrates and caches the advertising content. The terminal extracts an advertising content summary value, an advertising type, a device network type, and a local storage location of advertising content, to identify the advertising content to be cached in the advertising information. A specific form may be: {game-4G}-{45hsfrfswgh4345435, local storage location 1}, {568gwe4235gdgfdh45, local storage location 2}, and {1346590fdgfhj8531f, local storage location 3}. 45hsfrfswgh4345435 in {45hsfrfswgh4345435, local storage location 1} is a summary value of the advertising content 1, and the local storage location 1 is a local storage location of the advertising content 1. {568gwe4235gdgfdh45, local storage location 2} indicates information related to the advertising content 2, and {1346590fdgfhj8531f, local storage location 3} indicates information related to the advertising content 3.

Alternatively, when caching the advertising content, the terminal may cache the undisplayed advertising content, that is, integrate and cache the advertising content 2 and the advertising content 3 corresponding to the advertising information 2 and the advertising information 3 that are in the response message returned by the advertising server. A specific form may be: {game-4G}-{568gwe4235gdgfdh45, local storage location 2}, and {1346590fdgfhj8531f, local storage location 3}.

In this case, when a subsequent advertising request triggers request suppression, one piece of advertising content that corresponds to the advertising request and that is extracted from the cached advertising content is previously undisplayed advertising content, but meets an advertising request. In other words, the displayed advertising content is the advertising content 2 at the local storage location 2 or the advertising content 3 at the local storage location 3. This can ensure diversity of advertising. For a specific selection manner, refer to the foregoing description. Details are not described again.

Optionally, to ensure timeliness of the advertising, valid time is set for the cached advertising response. For example, the cached advertising response is valid in time to live (time to live, TTL). Alternatively, the cached advertising response is cleared after being exposed.

In still some embodiments of this application, the terminal caches partial information in the advertising information carried in the advertising response.

In a possible implementation, the terminal caches the partial information of the foregoing advertising information carried in the advertising response. The advertising information carried in the advertising response includes the advertising information in the different dimensions.

For example, based on the response message returned by the advertising server in S307, the terminal locally caches partial information of the three pieces of advertising information (the advertising information 1, the advertising information 2, and the advertising information 3) carried in the advertising response. The terminal extracts an advertising content summary value, a download address, an advertising type, and a device network type in the advertising information, combines the information into first advertising information, and locally caches the first advertising information. A specific form may be: {game-4G }-{ 45hsfrfswgh4345435, download address 1}, {568gwe4235gdgfdh45, download address 2}, and {1346590fdgfhj8531f, download address 3}. In this case, when a subsequent advertising request is suppressed, corresponding advertising content may be obtained based on the cached first advertising information, for example, the corresponding advertising content is obtained by using a download address in the first advertising information, and the advertising content is displayed on the terminal interface.

In another possible implementation, the terminal caches undisplayed advertising information in the advertising response.

For example, based on the foregoing example of displaying the advertising content corresponding to the advertising information 1 in S308, the terminal locally caches partial information in the other two pieces of undisplayed advertising information (the advertising information 2 and the advertising information 3) in the advertising response. A specific form may be: {game-4G}-{ 568gwe4235gdgfdh45, download address 2}, and {1346590fdgfhj8531f, download address 3}. Therefore, when a subsequent advertising request is suppressed, the previously undisplayed advertising content may be obtained based on the cached first advertising information, and the advertising content 2 whose download address 2 is "http://cs.op.hicloud.com/contserver/data/98B1E3F2CD1GHR4.jpg" or the advertising content 3 whose download address 3 is "http://cs.op.hicloud.com/contserver/data/345ETF89DFFw23KL.jpg" may be displayed. This ensures personalization and diversity of advertising.

For the advertising response returned by the advertising server, the terminal associates and stores, based on the information in different dimensions that is in the advertising request, the first advertising information including partial advertising information in the advertising response. For the advertising request that triggers request suppression, the terminal can quickly find corresponding first advertising information based on the information in the dimensions, and obtain advertising content based on the first advertising information, improving response efficiency of the terminal.

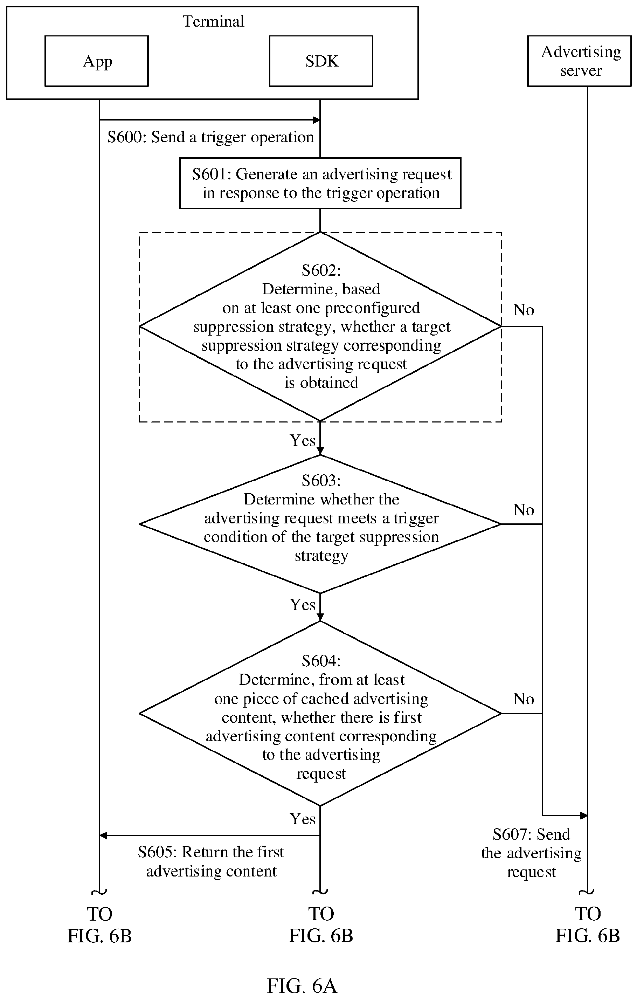

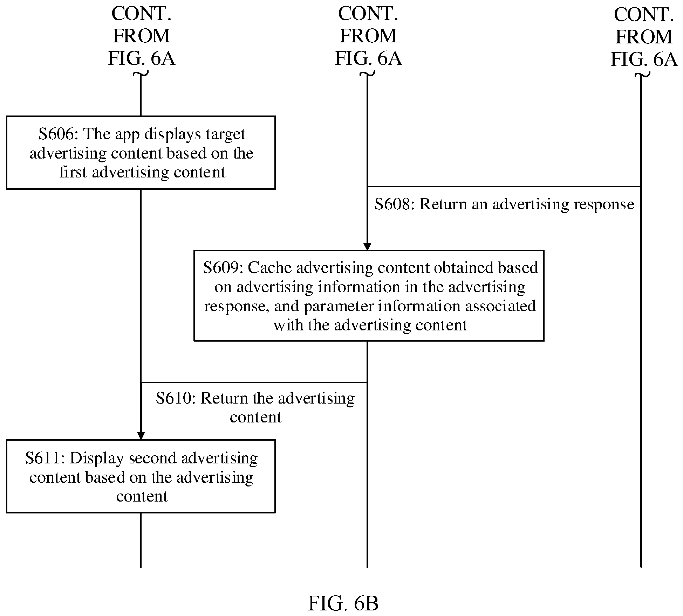

In some embodiments of this application, FIG. 6A and FIG. 6B are a flowchart of an advertising delivery method according to an embodiment of this application. To clearly show a processing procedure between components of a terminal, with reference to the system architecture shown in FIG. 1, the terminal is detailed into a terminal app and an SDK integrated by the terminal app, and the SDK integrated by the terminal app is described as an independent component.

S600: The terminal app sends a trigger operation to the SDK integrated by the terminal app.

Optionally, the terminal app integrates an SDK or SDKs corresponding to one or more advertising servers. When detecting that a user operation is to trigger the terminal app to display an advertisement, the terminal sends the trigger operation to the SDK integrated by the terminal app, so that the SDK integrated by the terminal app generates an advertising request for a current advertisement to be played. For a function of the advertising request and parameter information in different dimensions that is carried in the advertising request, refer to the foregoing descriptions.

S601: The SDK integrated by the terminal app generates the advertising request in response to the trigger operation.

For a specific implementation in which the SDK integrated by the terminal app generates the advertising request in response to the trigger operation, refer to S301. Details are not described again.

S602: The SDK integrated by the terminal app determines, based on at least one preconfigured suppression strategy, whether a target suppression strategy corresponding to the advertising request is obtained.

In this embodiment of this application, the SDK integrated by the terminal app interacts with a corresponding advertising server, to obtain the at least one suppression strategy configured by the advertising server.

In a possible implementation, after configuring the suppression strategy, the advertising server delivers the suppression strategy to the corresponding SDK, so that the SDK stores the suppression strategy, and manages, based on the advertising request suppression strategy, the advertising request sent by the SDK to the corresponding advertising server.

In another possible implementation, the SDK periodically sends a suppression strategy obtaining request to the advertising server, the advertising server returns the at least one configured suppression strategy to the SDK in response to the suppression strategy obtaining request.

In still another possible implementation, when the SDK receives an advertising request sent by the terminal app, the SDK sends a suppression strategy obtaining request to the corresponding advertising server, and the advertising server returns the at least one configured suppression strategy to the SDK in response to the suppression strategy obtaining request.

Optionally, the SDK integrated by the terminal app extracts and combines parameter information in different dimensions that is carried in the advertising request, and compares the combined information in the dimensions with information in the dimensions carried in at least one preconfigured suppression strategy. If the target suppression strategy with same information in dimensions is obtained, S603 is performed. If the target suppression strategy is not obtained, steps S607 to S611 are performed.

For example, an app 1 integrates two SDKs (an SDK 1 and an SDK 2). When a user starts the app 1, one splash advertisement needs to be displayed. The app 1 sends an advertising request to each of the integrated SDK 1 and the integrated SDK 2. The SDK 1 and the SDK 2 parse information in the dimensions carried in the advertising request, and compare this information in the dimensions with the information in the dimensions carried in the at least one preconfigured suppression strategy.

If the SDK 1 and the SDK 2 respectively obtain a corresponding target suppression strategy 1 and a corresponding target suppression strategy 2, it indicates that each SDK obtains a corresponding target suppression strategy, and S603 is performed.

If the SDK 1 obtains the target suppression strategy 1, S603 is performed. If the SDK 2 does not obtain the target suppression strategy, it indicates that the SDK 2 does not have the target suppression strategy corresponding to the advertising request, and steps S607 to S611 are performed.

Similarly, if the SDK 1 does not obtain the target suppression strategy, it indicates that the SDK 1 does not have the target suppression strategy corresponding to the advertising request, and steps S607 to S611 are performed. If the SDK 2 obtains the target suppression strategy 2, S603 is performed.

If neither the SDK 1 nor the SDK 2 obtains a corresponding target suppression strategy, it indicates that no target suppression strategy corresponding to the advertising request exists in each SDK, and steps S607 to S611 are performed.

S603: The SDK integrated by the terminal app determines whether the advertising request meets a trigger condition of the target suppression strategy.

Optionally, after determining the target suppression strategy, the SDK integrated by the terminal app records an actual number of times of sending an advertising request based on a suppression condition of the target suppression strategy, and determines, based on the suppression condition and the actual number of times of sending a request, whether the advertising request triggers request suppression. If the actual number of times of sending a request is greater than or equal to the number of times of sending a request in the suppression condition, it indicates that the advertising request meets the trigger condition of the target suppression strategy, and S604 is performed. If the actual number of times of sending a request is less than the number of times of sending a request in the suppression condition, it indicates that the advertising request does not meet the trigger condition of the target suppression strategy, and steps S607 to S611 are performed.

For example, based on the foregoing example in which the app 1 integrates the two SDKs (the SDK 1 and the SDK 2), it is assumed that the SDK 1 and the SDK 2 obtain the corresponding target suppression strategy 1 and the corresponding target suppression strategy 2. The SDK 1 determines, based on the target suppression strategy 1, whether the received advertising request triggers request suppression. The SDK 2 determines, based on the target suppression strategy 2, whether the received advertising request triggers request suppression.

If the SDK 1 and the SDK 2 determine that the advertising request meets trigger conditions of the respective target suppression strategies, S604 is performed.

If the SDK 1 determines that the advertising request meets a trigger condition of the target suppression strategy 1, S604 is performed. If the SDK 2 determines that the advertising request does not meet a trigger condition of the target suppression strategy 2, S607 to S611 are performed.

If the SDK 1 determines that the advertising request does not meet the trigger condition of the target suppression strategy 1, S607 to S611 are performed. If the SDK 2 determines that the advertising request meets the trigger condition of the target suppression strategy 2, S604 is performed.

If the SDK 1 and the SDK 2 determine that the advertising request does not meet the trigger conditions of the respective target suppression strategies, S607 to S611 are performed.

S604: The SDK integrated by the terminal app determines, from at least one piece of cached advertising content, whether there is first advertising content corresponding to the advertising request.

Optionally, each SDK integrated by the terminal app compares the parameter information in the different dimensions that is carried in the advertising request with information in different dimensions that corresponds to at least one piece of advertising content cached in the SDK. If a comparison result is that advertising content having same information in dimensions exists, the advertising content is determined as first advertising content corresponding to the advertising request, and S605 is performed. If the comparison result is that the advertising content having the same information in the dimensions does not exist, it is determined that first advertising content corresponding to the advertising request does not exist in an SDK cache, and S607 to S611 are performed. A specific implementation of determining the first advertising content is described in S304, and details are not described again.

For example, based on integrating the two SDKs by the app 1, it is assumed that the SDK 1 and the SDK 2 determine that the received advertising request meets the trigger conditions of the respective target suppression strategies. The SDK 1 and the SDK 2 respectively compare the parameter information in the different dimensions that is carried in the advertising request with information in different dimensions that corresponds to at least one piece of advertising content cached in the SDK 1 and the SDK 2, to obtain first advertising content corresponding to the advertising request.

If both the SDK 1 and the SDK 2 obtain the first advertising content, S605 is performed.

If the SDK 1 obtains first advertising content, S605 is performed. If the SDK 2 does not obtain first advertising content, S607 to S611 are performed.

If the SDK 1 does not obtain the first advertising content, S607 to S611 are performed. If the SDK 2 obtains the first advertising content, S605 is performed.

If neither the SDK 1 nor the SDK 2 obtains the first advertising content, S607 to S611 are performed.

S605: The SDK integrated by the terminal app returns the first advertising content to the terminal app.

Optionally, each SDK integrated by the terminal app returns obtained first advertising content to the terminal app.

S606: The terminal app displays target advertising content based on the first advertising content.

Optionally, the terminal app integrates all received first advertising content, and determines the target advertising content from the first advertising content. That is, the current target to-be-played advertising content is determined from the first advertising content according to a preset rule, and is displayed on a terminal interface.

S607: The SDK integrated by the terminal app sends the advertising request to the advertising server.

Optionally, the SDK integrated by the terminal app separately sends the advertising request to the corresponding advertising server, to request the corresponding advertising server to return an advertisement corresponding to the advertising request.

S608: The SDK integrated by the terminal app receives an advertising response sent by the advertising server.

Correspondingly, the advertising server returns the advertising response to the corresponding SDK. For a specific implementation in which the SDK of the terminal receives the advertising response sent by the advertising server, refer to S307. Details are not described again.

S609: The SDK integrated by the terminal app caches the advertising content obtained based on the advertising information in the advertising response, and parameter information associated with the advertising content.

In a possible implementation, the terminal obtains advertising content corresponding to each piece of advertising information based on the advertising information in the advertising response, and locally caches each piece of advertising content and parameter information associated with the advertising content. The parameter information associated with each piece of advertising content is generated based on advertising information corresponding to the advertising content.

In another possible implementation, the terminal obtains advertising content corresponding to each piece of advertising information based on the advertising information in the advertising response, and locally caches undisplayed advertising content and parameter information associated with the advertising content. In this case, the undisplayed advertising content is cached, to subsequently display the previously undisplayed advertising content.

Optionally, a specific implementation in which the terminal caches the advertising content and the parameter information associated with the advertising content is described in S309, and details are not described again.

For example, the app integrates SDKs (the SDK 1 and the SDK 2) of two advertising servers, the app has two advertising display opportunities, and the app separately sends an advertising request to the integrated SDKs. Both information in the dimensions included in the advertising request is an entertainment advertisement and a 4G network, and the SDK 1 and the SDK 2 determine, based on the respective target suppression strategies cached in the SDK 1 and the SDK 2, whether the advertising request triggers request suppression. If no request suppression is triggered, each SDK sends two advertising requests to a corresponding advertising server, to obtain two advertising responses. Each advertising response carries one piece of advertising information. Each piece of advertising information includes an advertising type, a terminal network type, an advertising content ID, and an advertising slot.

When each SDK caches advertising content, information in each dimension included in the advertising information of each advertising response, and a local storage address of the advertising content form a keyword to identify the advertising content. To be specific, the advertising content is cached in the following manner: SDK 1: { entertainment-4G}- {advertising content ID 1, local storage location 1}, and {advertising content ID 2, local storage location 2}, SDK 2: { entertainment-4G}-{ advertising content ID 3, local storage location 3}, and {advertising content ID 4, local storage location 4}.

For another example, as described in the foregoing example, it is assumed that information in the dimensions that is included in advertising information 1 carried in an advertising response 1 is an entertainment advertisement and a 4G network, and information in the dimensions included in advertising information 2 carried in the other advertising response 2 is a game advertisement and a 4G network. SDKs integrated by the terminal app separately set a keyword tag for combined personalized information in the dimensions, for example, SDK 1: {C}-{entertainment-4G}-{advertising content ID 1, local storage location 1}, and {D}- {game-4G}- {advertising content ID 5, local storage location 5}; and SDK 2: {C}-{entertainment-4G}-{advertising content ID 3, local storage location 3}, and {D}-{ game-4G}-{ advertising content ID 6, local storage location 6}.

For a specific implementation in which the advertising SDK caches the advertising content in this embodiment of this application, refer to S309. Details are not described again.

S610: The SDK integrated by the terminal app returns the advertising content to the terminal app.

It should be noted that there is no order for performing step S609 and step S610.

S611: The terminal app displays second advertising content based on the advertising content.

An implementation in which the terminal app displays the second advertising content is as described in the foregoing manner in which the terminal app displays the target advertising content. Details are not described again.

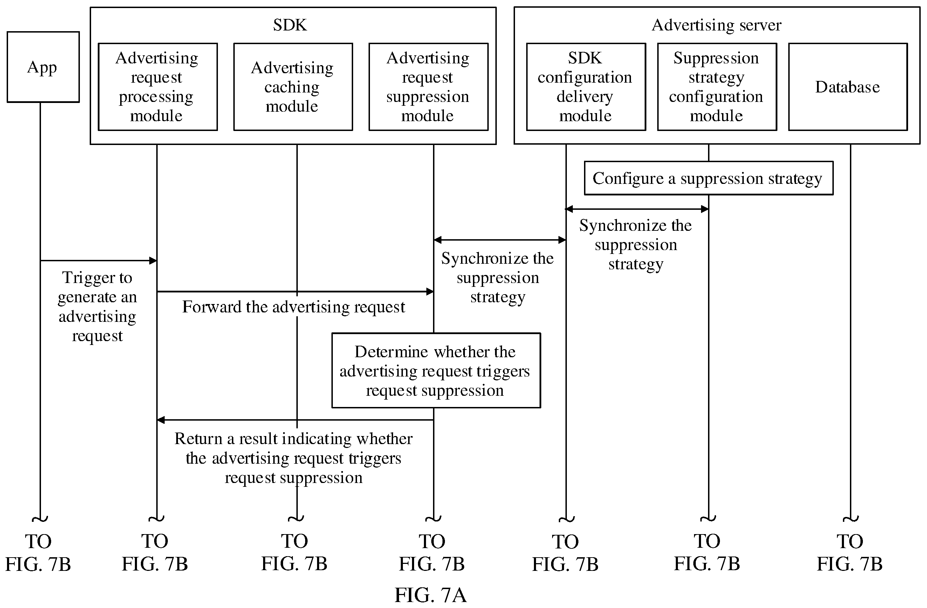

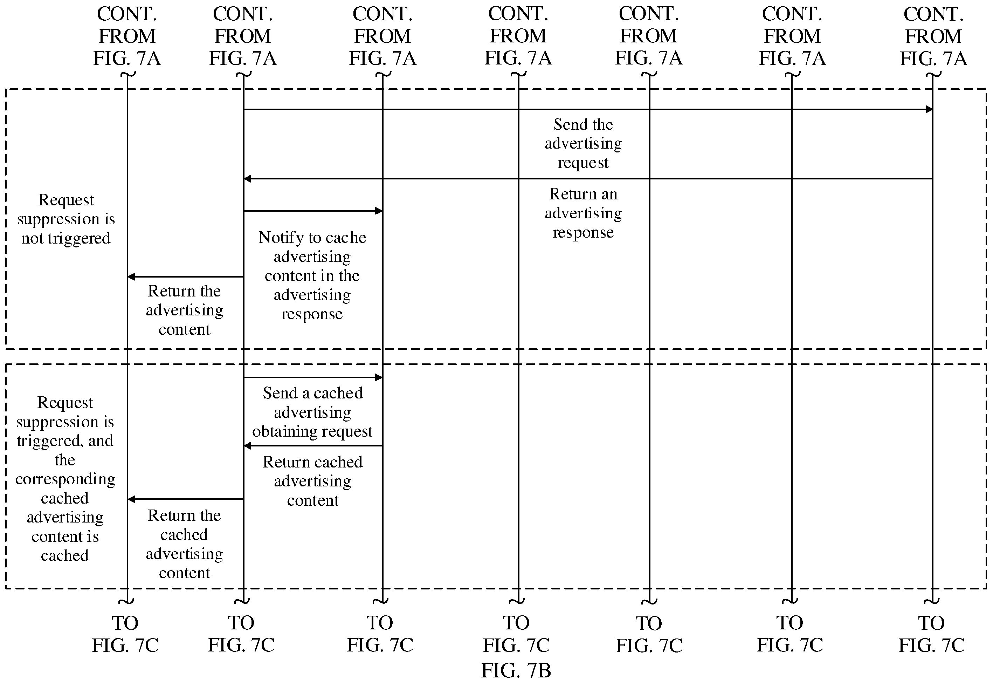

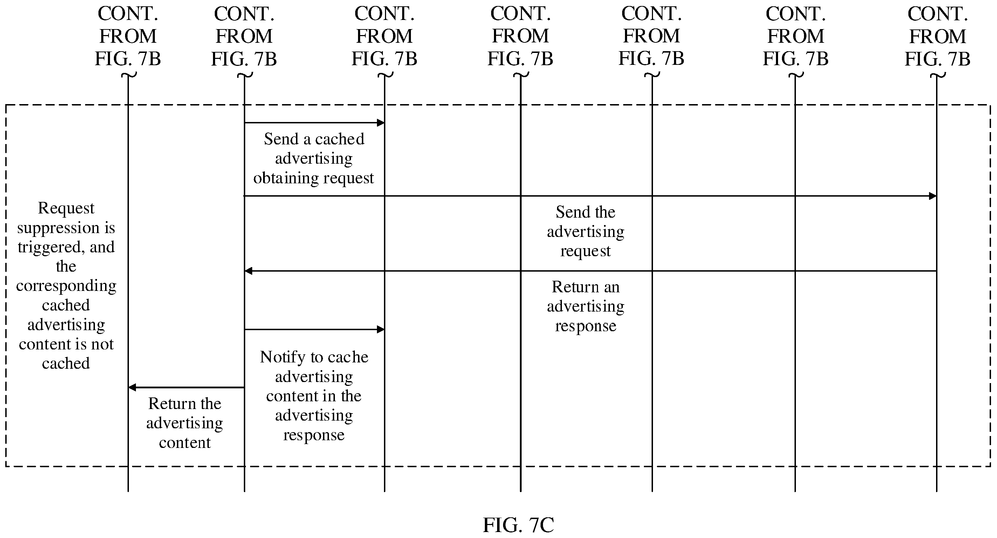

FIG. 7A to FIG. 7C show an architecture of an advertising delivery system to which the technical solutions in embodiments of this application are applicable. The advertising delivery system includes a terminal and an advertising server.

One or more apps are installed on the terminal, and each app integrates one or more SDKs. In this embodiment of this application, to clearly indicate a relationship between functional modules, the integrated SDK in the app is described as one independent functional module.

Optionally, the SDK includes an advertising request processing module, an advertising request suppression module, and an advertising caching module.

Optionally, the advertising server includes a suppression strategy configuration module, an SDK configuration delivery module, and a database.

In this embodiment of this application, the suppression strategy configuration module may be used to configure suppression strategies from different advertising dimensions, and synchronize the suppression strategies to the SDK configuration delivery module.

The SDK configuration delivery module may be configured to synchronize the suppression strategies to the advertising request suppression module of the SDK.

The database may store an advertising resource pool of the advertising server.

In this embodiment of this application, the app triggers the integrated SDK in the app to generate an advertising request, and the advertising request processing module of the SDK forwards the advertising request to the advertising request suppression module. The advertising request suppression module determines whether the advertising request triggers request suppression based on a suppression strategy, and returns a determining result to the advertising request processing module. The advertising request processing module performs a corresponding processing operation based on the determining result, and returns, to the app, advertising content obtained by performing the processing operation.

Correspondingly, the app receives the advertising content returned by the SDK, and displays the advertising content on a terminal interface.

Optionally, that the advertising request suppression module determines whether the advertising request triggers request suppression based on the suppression strategy includes:
The advertising request suppression module determines a target suppression strategy matching the advertising request, and determines, based on a suppression condition of the target suppression strategy, whether the advertising request triggers request suppression. If it is determined that the advertising request does not trigger request suppression, the advertising request is not suppressed, and the determination result is sent to the advertising request processing module. If it is determined that the advertising request triggers request suppression, the advertising request is suppressed according to a suppression method in the suppression strategy, and the determining result is sent to the advertising request processing module.

Optionally, that the advertising request processing module performs a corresponding processing operation based on the determining result includes:
When the determining result is that the advertising request does not trigger request suppression, the advertising request processing module sends the advertising request to the advertising server, receives an advertising response returned by the advertising server, and returns, to the app, advertising content obtained by processing the advertising response. In addition, the advertising request processing module notifies the advertising caching module to cache the advertising content and an identifier corresponding to the advertising content. This notification carries the advertising request and the advertising response.

When the determining result is that the advertising request triggers request suppression, a cached advertising obtaining request is sent to the advertising caching module, where the obtaining request carries the advertising request.

If an advertising response cached in the advertising caching module includes advertising content corresponding to the advertising request, the cached advertising content is returned to the advertising request processing module in response to the obtaining request.

If the advertising response cached in the advertising caching module does not include the advertising content corresponding to the advertising request, the advertising content is not returned. If the advertising request processing module does not obtain the advertising content, the advertising request processing module sends the advertising request to the advertising server, receives the advertising response returned by the advertising server, returns, to the app, the advertising content obtained by processing the advertising response, and notifies the advertising caching module to cache the advertising content.

It may be understood that the diagram of the system architecture shown in FIG. 7A to FIG. 7C is merely an example. During actual application, the terminal may include more or fewer modules, and the advertising server may also include more or more modules. Division of modules in the terminal and the advertising server is not limited in embodiments of this application. For example, the advertising request processing module and the advertising request suppression module in the SDK in the terminal may be integrated into one module. For another example, the advertising request suppression module may include a strategy configuration unit and an advertising request suppression unit. Specifically, the strategy configuration unit is configured to obtain the suppression strategy from the SDK configuration delivery module of the advertising server, and may be further configured to determine, based on the advertising request sent by the advertising request processing module, a suppression strategy matching the advertising request. The advertising request suppression unit is configured to: determine, based on the suppression strategy determined by the strategy configuring unit, whether the advertising request triggers request suppression, perform the corresponding processing operation based on the trigger result, and return the determining result to the advertising request processing module.

A system architecture and a service scenario described in this application are intended to describe the technical solutions of this application more clearly, and do not constitute a unique limitation to the technical solutions provided in this application. A person of ordinary skill in the art may know that, with evolution of a system architecture and emergence of a new service scenario, the technical solutions provided in this application are also applicable to similar technical problems.

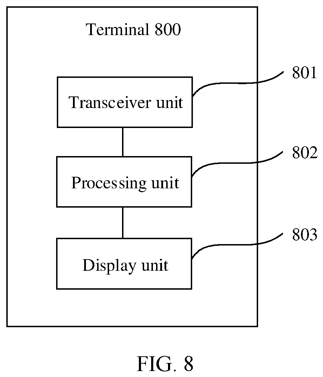

With reference to FIG. 3 to FIG. 7A to FIG. 7C, the foregoing describes in detail the advertising delivery method provided in embodiments of this application. The following describes in detail a terminal provided in an embodiment of this application with reference to FIG. 8.

In a possible design, FIG. 8 is a diagram of a structure of a terminal according to an embodiment of this application. As shown in FIG. 8, the terminal 800 may include a transceiver unit 801, a processing unit 802, and a display unit 803. The terminal 800 may be configured to implement a function of the terminal in the foregoing method embodiments.

Optionally, the transceiver unit 801 is configured to support the terminal 800 in performing S306 and S307 in FIG. 3, and/or is configured to support the terminal 800 in performing S3022 in FIG. 4, and/or is configured to support the terminal 800 in performing S600, S605, S607, S608, and S610 in FIG. 6A and FIG. 6B.

Optionally, the processing unit 802 is configured to support the terminal 800 in performing S301, S302, S303, S304, and S309 in FIG. 3, and/or is configured to support the terminal 800 in performing S601, S602, S603, S604, and S609 in FIG. 6A and FIG. 6B.

Optionally, the display unit 803 is configured to support the terminal 800 in performing S305 and S308 in FIG. 3, and/or is configured to support the terminal 800 in performing S606 and S611 in FIG. 6A and FIG. 6B.

The transceiver unit may include a receiving unit and a sending unit, may be implemented by a transceiver or a transceiver-related circuit component, and may be a transceiver or a transceiver module.

Optionally, the terminal 800 shown in FIG. 8 may further include a storage unit (not shown in FIG. 8), and the storage unit stores a program or instructions. When the transceiver unit 801, the processing unit 802, and the display unit 803 execute the program or the instructions, the terminal 800 shown in FIG. 8 can perform the advertising delivery methods in the foregoing method embodiments.

Operations and/or functions of the units in the terminal 800 are separately used to implement corresponding procedures of the advertising delivery methods in the foregoing method embodiments. All related content of the steps in the foregoing method embodiments may be referenced in function descriptions of corresponding functional units. For brevity, details are not described herein again.

For technical effects of the terminal 800 shown in FIG. 8, refer to the technical effects of the advertising delivery methods in the foregoing method embodiments. Details are not described herein again.

In addition to a form of the terminal 800, the technical solutions provided in this application may also be a functional unit or a chip in the terminal, or an apparatus matching the terminal for use.

An embodiment of this application further provides a chip system. The chip system includes a processor, the processor is coupled to a memory, and the memory is configured to store a program or instructions. When the program or the instructions is/are executed by the processor, the chip system is enabled to implement the method according to any one of the foregoing method embodiments.

Optionally, there may be one or more processors in the chip system. The processor may be implemented by using hardware, or may be implemented by using software. When the processor is implemented by using the hardware, the processor may be a logic circuit, an integrated circuit, or the like. When the processor is implemented by using the software, the processor may be a general-purpose processor, and is implemented by reading software code stored in the memory.

Optionally, there may be one or more memories in the chip system. The memory may be integrated with the processor, or may be disposed separately from the processor. This is not limited in embodiments of this application. For example, the memory may be a non-transitory processor, for example, a read-only memory (read-only memory, ROM). The memory and the processor may be integrated on a same chip, or may be separately disposed on different chips. A type of the memory and a manner of disposing the memory and the processor are not specifically limited in embodiments this application.

For example, the chip system may be a field programmable gate array (field programmable gate array, FPGA), an application-specific integrated circuit (application-specific integrated circuit, ASIC), a system on chip (system on chip, SoC), a central processing unit (central processing unit, CPU), a network processor (network processor, NP), a digital signal processor (digital signal processor, DSP), a micro controller unit (micro controller unit, MCU), a programmable logic device (programmable logic device, PLD), or another integrated chip.

It should be understood that the steps in the foregoing method embodiments may be completed by using an integrated logic circuit of hardware in the processor or instructions in a form of software. The steps of the method disclosed with reference to embodiments of this application may be directly performed by a hardware processor, or may be performed through a combination of hardware in the processor and a software module.

An embodiment of this application further provides a computer-readable storage medium. The computer-readable storage medium stores a computer program. When the computer program is run on a computer, the computer is enabled to perform the foregoing related steps, to implement the advertising delivery methods in the foregoing embodiments.

An embodiment of this application further provides a computer program product. When the computer program product runs on a computer, the computer is enabled to perform the foregoing related steps to implement the advertising delivery methods in the foregoing embodiments.

In addition, an embodiment of this application further provides an apparatus. The apparatus may be specifically a component or a module, and the apparatus may include one or more processors and memories that are connected to each other. The memory is configured to store a computer program. When the computer program is executed by one or more processors, the apparatus is enabled to perform the advertising delivery methods in the foregoing method embodiments.

The apparatus, the computer-readable storage medium, the computer program product, or the chip provided in embodiments of this application is configured to perform the corresponding method provided above. Therefore, for beneficial effects that can be achieved, refer to beneficial effects in the corresponding method provided above, and details are not described herein again.

Methods or algorithm steps described in combination with the content disclosed in this embodiment of this application may be implemented by hardware, or may be implemented by a processor by executing a software instruction. The software instructions may include a corresponding software module. The software module may be stored in a random access memory (random access memory, RAM), a flash memory, a read-only memory, an erasable programmable read-only memory (erasable programmable read-only memory, EPROM), an electrically erasable programmable read-only memory (electrically erasable programmable read-only memory, EEPROM), a register, a hard disk, a removable hard disk, a compact disc read-only disk (compact disc read-only memory, CD-ROM), or any other form of storage medium well-known in the art. For example, a storage medium is coupled to a processor, so that the processor can read information from the storage medium and write information into the storage medium. Certainly, the storage medium may be a component of the processor. The processor and the storage medium may be located in an application-specific integrated circuit (application-specific integrated circuit, ASIC).

Based on the descriptions of the foregoing implementations, a person skilled in the art may clearly understand that, for ease and brevity of description, division of the foregoing functional modules is merely used as an example for description. During actual application, the foregoing functions can be allocated to different functional modules for implementation as required, that is, an inner structure of an apparatus is divided into different functional modules to implement all or some of the functions described above. For a detailed working process of the foregoing system, apparatus, and unit, refer to a corresponding process in the foregoing method embodiments, and details are not described herein again.

In the several embodiments provided in this application, it should be understood that the disclosed method may be implemented in other manners. The described apparatus embodiments are merely examples. For example, division into the modules or units is merely logical function division and may be other division during an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the modules or units may be implemented in electronic, mechanical, or other forms.

In addition, functional units in embodiments of this application may be integrated into one processing unit, or each of the units may exist alone physically, or two or more units may be integrated into one unit. The integrated unit may be implemented in a form of hardware, or may be implemented in a form of a software functional unit.

The computer-readable storage medium includes but is not limited to any one of the following: any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. An advertising delivery method, comprising:
generating a first advertising request;
determining, based on a suppression strategy, whether the first advertising request is suppressed;
obtaining first advertising content locally based on the first advertising request if the first advertising request is suppressed; or if the first advertising request is suppressed, obtaining first advertising information locally based on the first advertising request and obtaining first advertising content based on the first advertising information; and displaying the first advertising content;
if the first advertising request is not suppressed, sending the first advertising request to a server and obtaining an advertising response from the server, wherein the advertising response comprises second advertising information; and
displaying, based on the advertising response, second advertising content corresponding to the second advertising information.

2. The advertising delivery method according to claim 1, wherein the first advertising request carries at least one piece of first parameter information, and the determining, based on a suppression strategy, whether the first advertising request is suppressed comprises:
determining, based on the at least one piece of first parameter information carried in the first advertising request, a suppression strategy corresponding to the first advertising request; and
determining, based on the suppression strategy corresponding to the first advertising request, whether the first advertising request is suppressed.

3. The advertising delivery method according to claim 2, wherein the method is applied to a device on which one or more applications are installed, and the application integrates an SDK or SDKs corresponding to one or more servers; and
the generating a first advertising request and determining, based on a suppression strategy, whether the first advertising request is suppressed comprises:
generating, by the SDK of the application, the first advertising request; and
determining, by the SDK based on the suppression strategy, whether the first advertising request is suppressed.

4. The advertising delivery method according to claim 3, wherein the obtaining first advertising content locally based on the first advertising request if the first advertising request is suppressed comprises:
if the SDK determines that the first advertising request is suppressed, obtaining, from at least one piece of locally cached advertising content based on the first advertising request, the first advertising content corresponding to the first advertising request;
or
the obtaining first advertising information locally based on the first advertising request and obtaining first advertising content based on the first advertising information, if the first advertising request is suppressed comprises:
if the SDK determines that the first advertising request is suppressed, obtaining, from at least one piece of locally cached advertising information based on the first advertising request, the first advertising information corresponding to the first advertising request, and obtaining the first advertising content based on the first advertising information.

5. The advertising delivery method according to claim 3 or 4, wherein the sending the first advertising request to a server and obtaining an advertising response from the server, if the first advertising request is not suppressed comprises:
if the SDK determines that the first advertising request is not suppressed, sending, by the SDK, the first advertising request to the server, and obtaining the advertising response from the server.

6. The advertising delivery method according to any one of claims 1 to 5, wherein the first advertising information comprises a download address of the first advertising content, and the second advertising information comprises a download address of the second advertising content.

7. The advertising delivery method according to any one of claims 1 to 6, wherein the method further comprises:
obtaining the suppression strategy from the server after generating the first advertising request;
or
obtaining, from the server based on the at least one piece of first parameter information carried in the first advertising request, the suppression strategy corresponding to the first advertising request.

8. The advertising delivery method according to any one of claims 1 to 6, wherein the method further comprises:
obtaining the suppression strategy from the server before generating the first advertising request.

9. The advertising delivery method according to any one of claims 1 to 8, wherein the suppression strategy comprises a suppression condition and a suppression method; and
the determining, based on a suppression strategy, whether the first advertising request is suppressed comprises:
if the first advertising request meets the suppression condition of the suppression strategy corresponding to the first advertising request, determining that the first advertising request is suppressed, and suppressing a second advertising request according to the suppression method of the suppression strategy corresponding to the first advertising request, wherein the second advertising request is an advertising request generated after the first advertising request.

10. The advertising delivery method according to any one of claims 1 to 9, wherein the obtaining first advertising content locally based on the first advertising request comprises:
obtaining the at least one piece of first parameter information from the first advertising request; and
obtaining the first advertising content from the at least one piece of locally cached advertising content based on the first parameter information;
or
the obtaining first advertising information locally based on the first advertising request and obtaining first advertising content based on the first advertising information comprises:
obtaining the at least one piece of first parameter information from the first advertising request;
obtaining the first advertising information from the at least one piece of locally cached advertising information based on the first parameter information; and
obtaining the first advertising content based on the first advertising information.

11. The advertising delivery method according to any one of claims 1 to 10, wherein the advertising response comprises at least one piece of advertising information, and the at least one piece of advertising information comprises the second advertising information; and
the displaying, based on the advertising response, second advertising content corresponding to the second advertising information comprises:
determining the second advertising information from the advertising response;
obtaining the second advertising content based on the second advertising information; and
displaying the second advertising content.

12. The advertising delivery method according to any one of claims 1 to 11, wherein the advertising response comprises at least one piece of advertising information, the at least one piece of advertising information comprises the second advertising information and third advertising information, and the method further comprises:
obtaining, based on the second advertising information, the second advertising content and second parameter information associated with the second advertising content; obtaining, based on the third advertising information, third advertising content and third parameter information associated with the third advertising content; and locally caching the second advertising content, the second parameter information, the third advertising content, and the third parameter information, wherein the third advertising information comprises a download address of the third advertising content, and the third advertising content is undisplayed advertising content; or
obtaining, based on the third advertising information, third advertising content and third parameter information associated with the third advertising content, and locally caching the third advertising content and the third parameter information.

13. The advertising delivery method according to any one of claims 1 to 12, wherein the second parameter information comprises one or more of the following: an advertising slot, an advertising type, an advertising form, an advertising floor price, an advertising size, and scenario information.

14. The advertising delivery method according to any one of claims 1 to 13, wherein the first parameter information comprises one or more of the following: an application identifier, an advertising slot, an advertising type, an advertising form, an advertising floor price, scenario information, and terminal device information.

15. A terminal, comprising:
an application, configured to generate a first advertising request;
an advertising request suppression module, configured to determine, based on a suppression strategy, whether the first advertising request is suppressed; and
an advertising request processing module, configured to: obtain first advertising content locally based on the first advertising request if the first advertising request is suppressed; or if the first advertising request is suppressed, obtain first advertising information locally based on the first advertising request and obtain first advertising content based on the first advertising information, wherein the application is further configured to display the first advertising content;
the advertising request processing module is further configured to: if the first advertising request is not suppressed, send the first advertising request to a server and obtain an advertising response from the server, wherein the advertising response comprises second advertising information; and
the application is further configured to display, based on the advertising response, second advertising content corresponding to the second advertising information.

16. The terminal according to claim 15, wherein the first advertising request carries at least one piece of first parameter information;
the advertising request suppression module is further configured to determine, based on the at least one piece of first parameter information carried in the first advertising request, the suppression strategy corresponding to the first advertising request; and
the advertising request suppression module is further configured to determine, based on the suppression strategy corresponding to the first advertising request, whether the first advertising request is suppressed.

17. The terminal according to any one of claims 15 and 16, wherein the first advertising information comprises a download address of the first advertising content, and the second advertising information comprises a download address of the second advertising content.

18. The terminal according to any one of claims 15 to 17, wherein
the advertising request suppression module is further configured to obtain the suppression strategy from the server after generating the first advertising request;
or
the advertising request suppression module is further configured to obtain, from the server based on the at least one piece of first parameter information carried in the first advertising request, the suppression strategy corresponding to the first advertising request.

19. The terminal according to any one of claims 15 to 17, wherein
the advertising request suppression module is further configured to obtain the suppression strategy from the server before generating the first advertising request.

20. The terminal according to any one of claims 15 to 19, wherein the suppression strategy comprises a suppression condition and a suppression method; and
the advertising request suppression module is further configured to: if the first advertising request meets the suppression condition of the suppression strategy corresponding to the first advertising request, determine that the first advertising request is suppressed, and suppress a second advertising request according to the suppression method of the suppression strategy corresponding to the first advertising request, wherein the second advertising request is an advertising request generated by the application after the first advertising request.

21. The terminal according to any one of claims 15 to 20, wherein
the advertising request processing module is further configured to obtain the at least one piece of first parameter information from the first advertising request; and
the advertising request processing module is further configured to obtain the first advertising content from at least one piece of locally cached advertising content based on the first parameter information;
or
the advertising request processing module is further configured to obtain the at least one piece of first parameter information from the first advertising request;
the advertising request processing module is further configured to obtain the first advertising information from at least one piece of locally cached advertising information based on the first parameter information; and
the advertising request processing module is further configured to obtain the first advertising content based on the first advertising information.

22. The terminal according to any one of claims 15 to 21, wherein the advertising response comprises at least one piece of advertising information, and the at least one piece of advertising information comprises the second advertising information;
the application is further configured to determine the second advertising information from the advertising response;
the application is further configured to obtain the second advertising content based on the second advertising information; and
the application is further configured to display the second advertising content.

23. The terminal according to any one of claims 15 to 22, wherein the advertising response comprises at least one piece of advertising information, the at least one piece of advertising information comprises the second advertising information and third advertising information, and the terminal further comprises:
an advertising caching module, configured to: obtain, based on the second advertising information, the second advertising content and second parameter information associated with the second advertising content; obtain, based on the third advertising information, third advertising content and third parameter information associated with the third advertising content; and locally cache the second advertising content, the second parameter information, the third advertising content, and the third parameter information, wherein the third advertising information comprises a download address of the third advertising content, and the third advertising content is undisplayed advertising content; or
the advertising caching module is configured to: obtain, based on the third advertising information, third advertising content and third parameter information associated with the third advertising content, and locally cache the third advertising content and the third parameter information.

24. The terminal according to any one of claims 15 to 23, wherein the second parameter information comprises one or more of the following: an advertising slot, an advertising type, an advertising form, an advertising floor price, an advertising size, and scenario information.

25. The terminal according to any one of claims 15 to 24, wherein the first parameter information comprises one or more of the following: an application identifier, an advertising slot, an advertising type, an advertising form, an advertising floor price, scenario information, and terminal device information.

26. A chip system, comprising at least one processor and at least one interface circuit, wherein the at least one interface circuit is configured to: perform receiving and sending functions, and send instructions to the at least one processor, and the at least one processor executes the instructions, and the at least one processor performs the method according to any one of claims 1 to 14.

27. A computer-readable storage medium, wherein the computer-readable storage medium comprises a computer program, and when the computer program runs on an electronic device, the electronic device is enabled to perform the method according to any one of claims 1 to 14.

28. A computer program product, wherein when the computer program product runs on a computer, the computer is enabled to perform the method according to any one of claims 1 to 14.
